(19)

Europäisches
Patentamt
European
Patent Office
Office européen
des brevets

(11) **EP 4 167 157 B1**

(12) **EUROPEAN PATENT SPECIFICATION**

(45) Date of publication and mention
of the grant of the patent:
**21.08.2024 Bulletin 2024/34**

(51) International Patent Classification (IPC):
**G06Q 10/04** (2023.01) **G06Q 10/0631** (2023.01)
**G06Q 50/02** (2024.01)

(21) Application number: **22173163.1**

(52) Cooperative Patent Classification (CPC):
**G06Q 10/0631; G06Q 10/04; G06Q 50/02**

(22) Date of filing: **13.05.2022**

(54) **METHODS AND SYSTEMS FOR GENERATING OPTIMAL COVERAGE PLAN TO PERFORM AGRICULTURAL ACTIVITIES**

VERFAHREN UND SYSTEME ZUM ERZEUGEN EINES OPTIMALEN ABDECKUNGSPLANS FÜR LANDWIRTSCHAFTLICHE TÄTIGKEITEN

PROCÉDÉS ET SYSTÈMES DE GÉNÉRATION DE PLAN DE COUVERTURE OPTIMALE POUR EFFECTUER DES ACTIVITÉS AGRICOLES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.10.2021 IN 202121046952**

(43) Date of publication of application:
**19.04.2023 Bulletin 2023/16**

(73) Proprietor: **Tata Consultancy Services Limited Maharashtra (IN)**

(72) Inventors:
• **CHOUDHURY, SWAGATAM BOSE**
**400601 Thane, Maharashtra (IN)**
• **SARANGI, SANAT**
**400601 Thane, Maharashtra (IN)**
• **PAPPULA, SRINIVASU**
**500081 Hyderabad, Telangana (IN)**

(74) Representative: **Goddar, Heinz J.**
**Boehmert & Boehmert**
**Anwaltspartnerschaft mbB**
**Pettenkoferstrasse 22**
**80336 München (DE)**

(56) References cited:
**CN-A- 113 379 268**

• **SINAI LIOR ET AL: "Efficient path planning for multiple agents in agriculture fields", 1 February 2020 (2020-02-01), XP055965453, Retrieved from the Internet <URL:http://essay.utwente.nl/80763/1/Sinai_MA _EEMCS.pdf> [retrieved on 20220927]**
• **ANONYMOUS: "Christofides algorithm - Wikipedia", 21 March 2021 (2021-03-21), pages 1 - 5, XP055968548, Retrieved from the Internet <URL:https://en.wikipedia.org/w/index.php?title =Christofides_algorithm&oldid=1013326916> [retrieved on 20221006]**

**Description**

CROSS-REFERENCE TO RELATED APPLICATIONS AND PRIORITY

The present application claims priority to Indian application no. 202121046952, filed on October 14, 2021.

TECHNICAL FIELD

The disclosure herein generally relates to the field of precision agriculture, and, more particularly, to methods and systems for generating optimal coverage plan to perform agricultural activities by farm workers.

BACKGROUND

Precision agriculture helps farmers to improve crop yield with fewer resources while the production cost is decreased. The precision agriculture requires management practices and actions to be undertaken in a timely manner for which the entire agricultural farm (herein after referred as 'farm' for simplicity) needs to be covered at regular intervals with a fixed set of resources particularly human resources such as farm workers. Management practices are agricultural activities including but are not limited to harvesting, sowing, spraying, applying fertilizers, pruning and tillage, and monitoring crop status. The human resources are to be deployed for completing the daily agricultural activities

Farms such as tea farm and coffee farm are labor intensive due to certain operations such as harvesting where leaves of a certain kind (in case of tea) when hand-picked give the best quality. Moreover, there may be other geographic and foliage considerations that make mechanization difficult. In order to ensure human resources are utilized effectively, it is essential to plan daily movement and quantum work of human resources from their base location keeping various other constraints in view like fixed working hours in a day and the need to cover the entire area of interest within a fixed period. Therefore, a deployment plan (in terms of minimum essential resources required) is essential to ensure the regular agricultural activities are performed optimally.

For the farm of a given area and a certain number of farm workers, the deployment plan helps to ensure that the entire farm are visited and covered within the required duration (in a certain number of days) and efforts for each day is also balanced to comply with standard working policies. This involves dealing with non-uniform section areas, distance considerations, pace of work and associated factors, and overcoming them. Further, the deployment plan needs to present for any given day the projected workforce utilization plan on the field for the coming days which will help complete the outstanding coverage requirement in a time-bound manner. This includes a view of portions in the farm, that will be covered each day and in which order.

Further, in the precision agriculture, the planned agricultural activities, associated operations, and the associated deployments are subject to interruptions. For example, a section of the sub-plot affected by pests and diseases on which a certain pesticide has been applied cannot be harvested for a given period to avoid pesticide residues in the harvest. Similarly, natural/ man-made calamities may prevent the harvest from happening for a given section due to certain other restrictions. The deployment plan needs to adapt in real-time to such outages in the planned operations and alternative plans may be required for successful completion of the agricultural activities. Hence, determining the deployment plan towards complete coverage of a field is a challenge while performing the required agricultural activities with the limited human resources.

Most of the conventional techniques in the art for determining the deployment plan are limited to mechanized and non-human resources and hence are further suited to dedicated farm types. Also, the conventional techniques may not employ the constraints such as the limited human farm workers, the complete set of the agricultural activities that needs to be done within the given time frame, optimizing the cost, and so on. Also, most of the conventional techniques are limited only to certain agricultural activity type at a time. Further, the conventional techniques are not focused on determining the revised deployment plan in case of unforeseen conditions, for smooth and uninterrupted completion of the agricultural activities.

The document (CN113379268A) describes agricultural machinery scheduling method for resolving an initial population of a genetic algorithm based on Christofises, aiming at the problem of agricultural machinery scheduling, and the method comprises the following steps: chromosome coding; determining a fitness function; calculating a result by Christofises to generate an initial population; selecting operation; performing cross operation; performing mutation operation; and (5) judging the termination condition. In the invention, in the initial population stage, the calculation result of the Christofises algorithm is used as the initial population generation so as to improve the performance of the genetic algorithm; and then, genetic operations such as POX crossing, exchange variation, insertion variation and the like are adopted to optimize the population, so that the diversity of the population is guaranteed. The improved genetic algorithm has high convergence speed and can obtain a better objective function value; the farmland dimension change is in direct proportion to the distance reduction rate and the time increase rate; the dimension change of the agricultural machinery basically has no influence on the distance reduction rate and the time increase rate.

The document (Sinai Lior ET AL: "Efficient path planning for multiple agents in agriculture fields", 1 February 2020) describes a continuous environment with a basic physics model without collisions, which is used to simulate aerial robots, and a grid environment with obstacles, which is used to simulate ground robots moving between crops. The obstacles were static, so Dijkstra's algorithm was used to find the shortest paths around them. This meant the same algorithms could be used in both environments. Exact solutions were found with the Bellman-Held-Karp algorithm, but it runs in exponential time. The focus instead was on more practical approximation algorithms which run in polynomial time. These were: nearest neighbour (NN) ranked, dividing the field into clusters and then using the NN algorithm or Christofides' algorithm, Ant Colony Optimisation (ACO) and Q-learning. Of these, ACO performed the best on the distance and time metrics. However the solution is partly random, which resulted in path crossing - which increases the chances of collisions between agents - and a large spread between the distances agents' travel - which leads to uneven wear and tear. Clustering with NN or Christofides' gave more controlled solutions with comparable metrics.

The document (Christofides algorithm - Wikipedia", 21 March 2021 (2021-03-21), pages 1-5) ding approximate solutions to the travelling salesman problem, on instances where the distances form a metric space (they are symmetric and obey the triangle inequality)./4] It is an approximation algorithm that guarantees that its solutions will be within a factor of 3/2 of the optimal solution length, and is named after NicosChristofides and AnatoliyI. Serdyukov, This algorithm still stands as the best polynomial time approximation algorithm that has been thoroughly peer-reviewed by the relevant scientific community for the traveling salesman problem on general metric spaces. In July 2020 however, Karlin, Klein, and Gharan released a preprint in which they introduced a novel approximation algorithm and claimed that its approximation ratio is $1.5 - 10^{-36}$. Their method follows similar principles to Christofides' algorithm, but uses a randomly chosen tree from a carefully chosen random distribution in place of the minimum spanning tree.

SUMMARY

Embodiments of the present disclosure present technological improvements as solutions to one or more of the above-mentioned technical problems recognized by the inventors in conventional systems.

In an aspect, there is provided a processor-implemented method for generating optimal coverage plan to perform agricultural activities, the method is embodied in claims 1-6..

In another aspect, there is provided a system for generating optimal coverage plan to perform agricultural activities, the system comprising: a memory storing instructions; one or more Input/Output (I/O) interfaces; and one or more hardware processors coupled to the memory via the one or more I/O interfaces, wherein the one or more hardware processors are configured by the instructions to: perform steps as embodied in claims 7-13..

In yet another aspect, there is provided a computer program product comprising a non-transitory computer readable medium having a computer readable program embodied therein, wherein the computer readable program, when executed on a computing device, causes the computing device to perform step embodied in claim 14:.

It is to be understood that both the foregoing general description and the following detailed description are exemplary and explanatory only and are not restrictive of the embodiments of the present disclosure, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 is an exemplary block diagram of a system for generating optimal coverage plan to perform agricultural activities, in accordance with some embodiments of the present disclosure.

FIG. 2 is an exemplary block diagram illustrating modules of the system of FIG. 1 for generating optimal coverage plan to perform agricultural activities, in accordance with some embodiments of the present disclosure.

FIG. 3A and FIG. 3B illustrate exemplary flow diagrams of a processor-implemented method for generating optimal coverage plan to perform agricultural activities, in accordance with some embodiments of the present disclosure.

FIG. 4 is an exemplary plot diagram for analyzing the performance of the present disclosure.

FIG. 5 is a graph showing a variation in standard deviation of man-day hours and plot area, in accordance with some embodiments of the present disclosure.

FIG. 6 is a plot diagram showing the optimal coverage plan for the exemplary plot diagram of FIG. 4 during normal scenarios, in accordance with some embodiments of the present disclosure.

FIG. 7 is a plot diagram showing the optimal coverage plan for the exemplary plot diagram of FIG. 4 during unforeseen scenarios, in accordance with some embodiments of the present disclosure.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

The present disclosure herein provides methods and systems for generating optimal coverage plan to perform agricultural activities by farm workers, to solve the technical problems for determining the optimal deployment plan considering the constraints such as the limited human farm workers, the complete the agricultural activities within the given time frame, optimizing the cost, and so on. According to the present disclosure, the entire farm or the plot is divided to smaller units such as sub-plots and the agricultural activities required for each sub-plot are identified. Then, the uniform clusters are formed from the sub-plots such that the given constraints are satisfied, using a uniform distribution algorithm. An optimal routing algorithm is employed to determine the optimal path for each uniform cluster. Lastly, the uniform clusters are assigned to the farm workers to perform the agricultural activities, and the deployment coverage daily plan is generated using the optimal path for each cluster, so that the total traversing time to cover the sub-plots is minimized.

In the context of the present disclosure, the terms such as 'field', 'farm', 'plot', 'agricultural farm' refers to any agricultural area where the agricultural activities to be performed. Further, the terms 'sub-plots', 'portions' refers to some parts of the agricultural area.

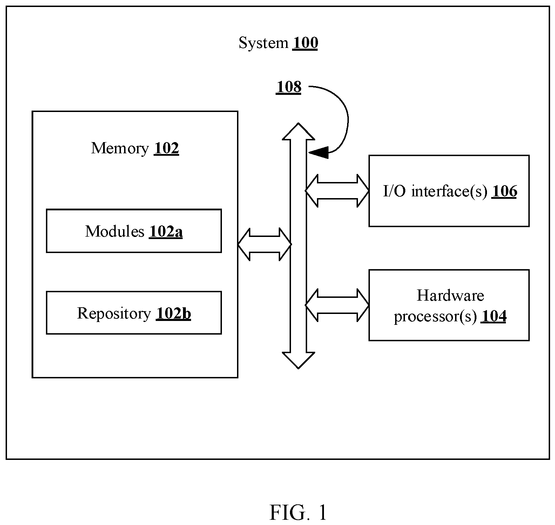

Referring now to the drawings, and more particularly to FIG. 1 through FIG. 7, where similar reference characters denote corresponding features consistently throughout the figures, there are shown preferred embodiments and these embodiments are described in the context of the following exemplary systems and/or methods.

FIG. 1 is an exemplary block diagram of a system 100 for generating optimal coverage plan to perform agricultural activities, in accordance with some embodiments of the present disclosure. In an embodiment, the system 100 includes or is otherwise in communication with one or more hardware processors 104, communication interface device(s) or input/output (I/O) interface(s) 106, and one or more data storage devices or memory 102 operatively coupled to the one or more hardware processors 104. The one or more hardware processors 104, the memory 102, and the I/O interface(s) 106 may be coupled to a system bus 108 or a similar mechanism.

The I/O interface(s) 106 may include a variety of software and hardware interfaces, for example, a web interface, a graphical user interface, and the like. The I/O interface(s) 106 may include a variety of software and hardware interfaces, for example, interfaces for peripheral device(s), such as a keyboard, a mouse, an external memory, a plurality of sensor devices, a printer and the like. Further, the I/O interface(s) 106 may enable the system 100 to communicate with other devices, such as web servers and external databases.

The I/O interface(s) 106 can facilitate multiple communications within a wide variety of networks and protocol types, including wired networks, for example, local area network (LAN), cable, etc., and wireless networks, such as Wireless LAN (WLAN), cellular, or satellite. For the purpose, the I/O interface(s) 106 may include one or more ports for connecting a number of computing systems with one another or to another server computer. Further, the I/O interface(s) 106 may include one or more ports for connecting a number of devices to one another or to another server.

The one or more hardware processors 104 may be implemented as one or more microprocessors, microcomputers, microcontrollers, digital signal processors, central processing units, state machines, logic circuitries, and/or any devices that manipulate signals based on operational instructions. Among other capabilities, the one or more hardware processors 104 are configured to fetch and execute computer-readable instructions stored in the memory 102. In the context of the present disclosure, the expressions 'processors' and 'hardware processors' may be used interchangeably. In an embodiment, the system 100 can be implemented in a variety of computing systems, such as laptop computers, portable computers, notebooks, hand-held devices, workstations, mainframe computers, servers, a network cloud and the like.

The memory 102 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. In an embodiment, the memory 102 includes a plurality of modules 102a and a repository 102b for storing data processed, received, and generated by one or more of the plurality of modules 102a. The plurality of modules 102a may include routines, programs, objects, components, data structures, and so on, which perform particular tasks or implement particular abstract data types.

The plurality of modules 102a may include programs or computer-readable instructions or coded instructions that supplement applications or functions performed by the system 100. The plurality of modules 102a may also be used as, signal processor(s), state machine(s), logic circuitries, and/or any other device or component that manipulates signals based on operational instructions. Further, the plurality of modules 102a can be used by hardware, by computer-readable instructions executed by the one or more hardware processors 104, or by a combination thereof. In an embodiment, the plurality of modules 102a can include various sub-modules (not shown in FIG. 1). Further, the memory 102 may include information pertaining to input(s)/output(s) of each step performed by the processor(s) 104 of the system 100 and methods of the present disclosure.

The repository 102b may include a database or a data engine. Further, the repository 102b amongst other things, may serve as a database or includes a plurality of databases for storing the data that is processed, received, or generated as a result of the execution of the plurality of modules 102a. Although the repository 102b is shown internal to the system 100, it will be noted that, in alternate embodiments, the repository 102b can also be implemented external to the system 100, where the repository 102b may be stored within an external database (not shown in FIG. 1) communicatively coupled to the system 100. The data contained within such external database may be periodically updated. For example, new data may be added into the external database and/or existing data may be modified and/or non-useful data may be deleted from the external database. In one example, the data may be stored in an external system, such as a Lightweight Directory Access Protocol (LDAP) directory and a Relational Database Management System (RDBMS). In another embodiment, the data stored in the repository 102b may be distributed between the system 100 and the external database.

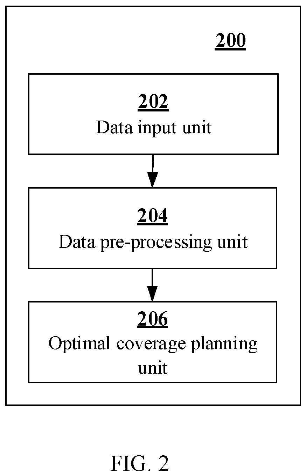

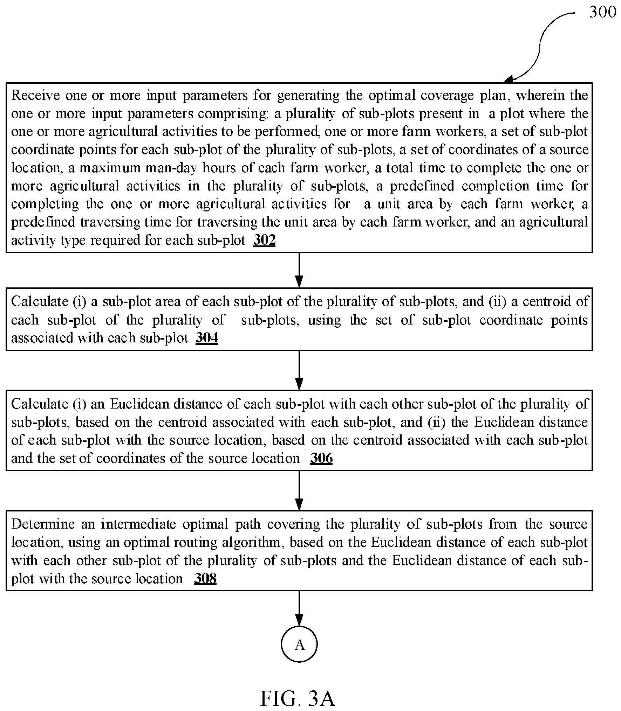

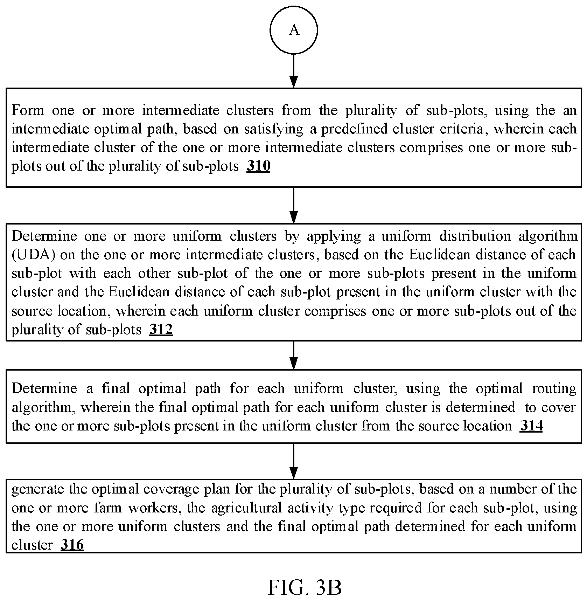

Referring collectively to FIG. 2 and FIG. 3A and FIG. 3B, components and functionalities of the system 100 are described in accordance with an example embodiment of the present disclosure. For example, FIG. 2 is an exemplary block diagram illustrating modules of the system 100 of FIG. 1 for generating optimal coverage plan to perform agricultural activities, in accordance with some embodiments of the present disclosure. As shown in FIG. 2, the modules 200 include a data input unit 202, a data pre-processing unit 204, and an optimal coverage planning unit 206. The optimal coverage planning unit 206 further includes an optimal path determining unit 206a (not shown in FIG. 2), an intermediate clusters determining unit 206b (not shown in FIG. 2), and a uniform clusters determining unit 206c (not shown in FIG. 2). In an embodiment, the modules 200 of FIG. 2 may be stored in the plurality of modules 102a comprised in the memory 102 of the system 100.

FIG. 3A and FIG. 3B illustrate exemplary flow diagrams of a processor-implemented method 300 for generating optimal coverage plan to perform agricultural activities, in accordance with some embodiments of the present disclosure. Although steps of the method 300 including process steps, method steps, techniques or the like may be described in a sequential order, such processes, methods and techniques may be configured to work in alternate orders. In other words, any sequence or order of steps that may be described does not necessarily indicate a requirement that the steps be performed in that order. The steps of processes described herein may be performed in any practical order. Further, some steps may be performed simultaneously, or some steps may be performed alone or independently.

At step 302 of the method 300, the one or more hardware processors 104 of the system 100 are configured to receive one or more input parameters for generating the optimal coverage plan to perform the one or more agricultural activities, through the data input unit 202. The one or more input parameters include a plurality of sub-plots ($p_n$) present in a plot P where the one or more agricultural activities to be performed, one or more farm workers ($W_m$), a set of sub-plot coordinate points C for each sub-plot of the plurality of sub-plots, a set of coordinates ($C_s$) of a source location S, a maximum man-day hours ($t_{max}$) of each farm worker, a total time ($T_{total}$) to complete the one or more agricultural activities in the plurality of sub-plots, a predefined completion time ($t_a$) for completing each agricultural activity for a unit area by each farm worker, a predefined traversing time ($t_{walking}$) for traversing the unit area by each farm worker, and one or more agricultural activity types required for each sub-plot. In an embodiment, the one or more input parameters may be defined by the farm owner or the plot owner or a concern management people.

In an embodiment, the plot P refers to any agricultural field and includes the plurality of sub-plots ($p_n$), wherein n refers a number of the plurality of sub-plots. More particularly, the plurality of sub-plots ($p_n$) forms to the plot P. Each sub-plot ($p_n$) may be identified either with a sub-plot name or with a unique sub-plot identification number (ID) such as $p_1, p_2, p_3, ... , p_n$. In an embodiment, the plot or the agricultural field P refers a large area (for example, 1000 acres, 500 hectares, and so on) where the one or more crops may be cultivated. For example, the agricultural field or the plot includes, a tea farm, coffee farm, paddy field, and so on, or as a combination thereof. In an embodiment, the one or more agricultural activities include but are not limited to harvesting, sowing, spraying, applying fertilizers, pruning and tillage, and monitoring crop status.

In an embodiment, the one or more farm workers ($W_m$) are the workers and more particularly human resources available to perform the one or more agricultural activities in each sub-plot ($p_n$), wherein m refers to a number of the farm workers needed or available. Each farm worker ($W_m$) may be identified either with a farm worker name or with a unique farm worker identification number (ID) such as $W_1, W_2, W_3, ... , W_m$. In an embodiment, the set of sub-plot coordinate points C for each sub-plot ($p_n$) includes coordinates points of the sub-plot ($p_n$). More specifically, each coordinates point of the sub-plot ($p_n$) may be a set of X and Y coordinates, or a set of latitude and longitude that may be measured or calculated using a Global Positioning System (GPS) map. Each sub-plot ($p_n$) may be a polygonal shape such as a square, pentagon, octagon and so on. Hence, each sub-plot ($p_n$) includes a number of the coordinate points based on the polygonal shape of the sub-plot ($p_n$). For example, if the shape of sub-plot ($p_n$) is the square, then such sub-plot ($p_n$) includes four coordinate points. If the shape of sub-plot ($p_n$) is the octagon, then such sub-plot ($p_n$) includes

eight coordinate points, and so on.

In an embodiment, the set of coordinates ($C_s$) of the source location S, may be a point that contain X and Y coordinates, or the set of latitude and longitude ($C_s = (C_{latitude}, C_{longitude})$) that may be measured or calculated using the Global Positioning System (GPS) map. The source location S represents the point from which each farm worker ($W_m$) may start to reach the sub-plot ($p_n$) to perform the one or more agricultural activities. The source location S otherwise represents a common location from where each farm worker ($W_m$) has to start daily to reach the sub-plot ($p_n$). The maximum man-day hours ($t_{max}$) of each farm worker represent a maximum time each farm worker ($W_m$) may work in a given day. In an embodiment, the maximum man-day hours ($t_{max}$) are same for each farm worker. In another embodiment, the maximum man-day hours ($t_{max}$) are different for each farm worker. Further, in another embodiment, the maximum man-day hours ($t_{max}$) are same for some of the farm workers and the maximum man-day hours ($t_{max}$) are different for remaining farm workers, or a combination thereof. In an embodiment, the maximum man-day hours ($t_{max}$) of each farm worker may be measured in terms of hours or days. For example, the maximum man-day hours ($t_{max}$) may be 8 hours or 0.333 days, for each day.

The total time ($T_{total}$) to complete the one or more agricultural activities in the plurality of sub-plots ($p_n$), represents the time for completing one or more agricultural activities in the plurality of sub-plots ($p_n$). In an embodiment, the total time ($T_{total}$) to complete the one or more agricultural activities in the plurality of sub-plots ($p_n$) may be measured in terms of hours or days. For example, the total time ($T_{total}$) to complete the one or more agricultural activities in the plurality of sub-plots ($p_n$) may be 120 hours, or 5 days. In an embodiment, the total time ($T_{total}$) to complete the one or more agricultural activities in the plurality of sub-plots ($p_n$), is an estimated time and may be defined by an owner or concerned person of the plot, wherein the estimated time may be defined based on a historical value or based on experience.

The predefined completion time ($t_a$) for completing the one or more agricultural activities for the unit area by each farm worker, represents the time to complete one-unit area of each sub-plot ($p_n$), by the farm worker. For example, the unit area may be a square meter or a square yard. Again, the predefined completion time ($t_a$) for completing the one or more agricultural activities for the unit area by each farm worker, is the estimated time and may be defined by the owner or concern person of the plot. The predefined traversing time ($t_a$) for traversing the unit area by each farm worker represents an average travel time to complete one-unit area of each sub-plot by the farm worker. The one or more agricultural activity types required for each sub-plot, are the one or more agricultural activities include but are not limited to harvesting, sowing, spraying, applying fertilizers, pruning and tillage, and monitoring crop status. In an embodiment, one sub-plot may require only one agricultural activity. In another embodiment, one sub-plot may require multiple agricultural activity types.

In an embodiment, the one or more input parameters received at step 302 of the method 300 may be pre-processed through the data pre-processing unit 204 and represented in the form of a data frame defined with a predefined data frame format. The obtained data frame is provided as an input to the optimal coverage planning unit 206 for generating optimal coverage plan to perform agricultural activities by farm workers. Table 1 shows an exemplary data frame considering 4 sub-plots present in the plot.

Table 1

| Sub_plot ID | C | $W_m$ | $C_s$ | $t_{max}$ | $T_{total}$ | $t_{walking}$ | $t_a$ | Activity type |
|---|---|---|---|---|---|---|---|---|
| sub_plot_ 1 | (p_1, p_2, p_3, p_4) | 2 | ($C_{latitude}$, $C_{longitude}$) | 3 | 12 | 1 | 1 | Harvesting |
| sub_plot_ 2 | (q_1, q_2, q_3) | 2 | ($C_{latitude}$, $C_{longitude}$) | 3 | 12 | 1 | 1 | Applying fertilizer |
| sub_plot_ 3 | (r_1, r_2, r_3, r_4) | 2 | ($C_{latitude}$, $C_{longitude}$) | 3 | 12 | 1 | 1 | Pruning |
| sub_plot_ 4 | (s_1, s_2, s_3, s_4) | 2 | ($C_{latitude}$, $C_{longitude}$) | 3 | 12 | 1 | 1 | Applying fertilizer |

At step 304 of the method 300, the one or more hardware processors 104 of the system 100 are configured to calculate a sub-plot area ($A_p$) of each sub-plot of the plurality of sub-plots ($p_n$), and a centroid ($C_p$) of each sub-plot of the plurality of sub-plots ($p_n$). The sub-plot area ($A_p$) of each sub-plot ($p_n$) is calculated using the set of sub-plot coordinate points C associated with the sub-plot ($p_n$) received at step 302 of the method 300 and based on the shape of the sub-plot ($p_n$). For example, if the shape of the sub-plot is the square, then the sub-plot area ($A_p$) of such sub-plot is calculated by multiplying a length of the sub-plot with a width of the sub-plot, wherein the length and the width of the sub-plot ($p_n$) are calculated using the set of sub-plot coordinate points C associated with the sub-plot.

Further, the centroid ($C_p$) of each sub-plot ($p_n$) is calculated using the set of sub-plot coordinate points C associated with the sub-plot received at step 302 of the method 300 and based on the shape of the sub-plot ($p_n$). For example, if the shape of the sub-plot ($p_n$) is the square, then the centroid ($C_p$) of such sub-plot is the point where the diagonals of the sub-plot intersect each other. The centroid ($C_p$) of each sub-plot ($p_n$) is the point having a set of coordinates. The data frame obtained at step 302 may be appended with the sub-plot area ($A_p$) of each sub-plot of the plurality of sub-plots, and the centroid ($C_p$) of each sub-plot of the plurality of sub-plots.

At step 306 of the method 300, the one or more hardware processors 104 of the system 100 are configured to calculate a Euclidean distance ($d$) of each sub-plot ( for example, $p_i$ where $i$ is a natural number) with each other sub-plots ( for example, $p_j$, ..., $p_n$ where $j$ is a natural number but $i \neq j$) and the Euclidean distance ($d$) of each sub-plot ($p_n$) with the source location $S$. The Euclidean distance ($d$) of each sub-plot with each other sub-plot is calculated based on the centroid ($C_p$) associated with the corresponding sub-plot, obtained at step 304 of the method 300, using a Euclidean distance formula. For example, if there are two sub-plots with $p_1$ and $p_2$ with respective centroids ($C_p$) are ($X_1$, $Y_1$) and ($X_2$, $Y_2$) respectively, then the Euclidean distance ($d$) between the two sub-plots with $p_1$ and $p_2$ is calculated using the Euclidean distance formula as mentioned in equation 1:

$$d = \sqrt{(X_2 - X_1)^2 + (Y_2 - Y_1)^2} \text{ ---------- (1)}$$

Similarly, the Euclidean distance ($d$) of each sub-plot ($p_n$) with the source location $S$ is calculated based on the centroid ($C_p$) associated with the sub-plot and the set of coordinates ($C_s$) of the source location S, obtained at step 304 of the method 300, using the Euclidean distance formula as mentioned in equation (1). Further, the data frame obtained at step 304 may be appended with the Euclidean distance ($d$) of each sub-plot ($p_i$) with each other sub-plots ($p_j$, ..., $p_n$) and the Euclidean distance ($d$) of each sub-plot ($p_n$) with the source location $S$.

At step 308 of the method 300, the one or more hardware processors 104 of the system 100 are configured to determine an intermediate optimal path ($OP_i$) covering the plurality of sub-plots ($p_n$) from the source location $S$, through the optimal path determining unit 206a present in the optimal coverage planning unit 206. The intermediate optimal path ($OP_i$) covering the plurality of sub-plots ($p_n$) from the source location $S$ is determined based on the Euclidean distance ($d$) of each sub-plot with each other sub-plot of the plurality of sub-plots and the Euclidean distance ($d$) of each sub-plot with the source location, obtained at step 306 of the method 300.

The optimal path determining unit 206a may include an optimal routing algorithm such as Christofides algorithm (heuristic algorithm) which may be used to determine the intermediate optimal ($OP_i$) covering the plurality of sub-plots ($p_n$) from the source location $S$. According to the Christofides algorithm, firstly, a first minimum spanning tree covering the plurality of sub-plots ($p_n$) and the source location $S$, is determined based on the Euclidean distance ($d$) of each sub-plot with each other sub-plot of the plurality of sub-plots and the Euclidean distance ($d$) of each sub-plot with the source location. In the first minimum spanning tree, each vertex of a plurality of vertices represents either a source location $S$ or a sub-plot of the plurality of sub-plots ($p_n$). Hence the number of the plurality of vertices is a sum the number of the plurality of sub-plots ($p_n$) and the source location $S$. Further, each edge of a plurality of edges in the first minimum spanning tree represents a connection between either (i) the source location S and the sub-plot ($p_n$), or (ii) between two sub-plots (within $p_n$).

Next, a plurality of odd vertices out of the plurality of vertices present in the first minimum spanning tree, is calculated based on a degree of each vertex. In an embodiment, the degree of each vertex is calculated based on the number of edges connected to the corresponding vertex. If the number of the edges connected to a vertex is even, then such vertex is referred as an even vertex. Similarly, If the number of the edges connected to the vertex is odd, then such vertex is referred as an odd vertex.

Further, one or more perfect matching sub-graphs, are created from the plurality of odd vertices. Each perfect matching sub-graph comprises at least two odd vertices from the plurality of odd vertices. Next, the one or more perfect matching sub-graphs are combined to the first minimum spanning tree, to calculate a first Eulerian circuit. Lastly, one or more duplicate vertices in the first Eulerian circuit are removed to create a first Hamiltonian circuit. The first Hamiltonian circuit represents the intermediate optimal path ($OP_i$) covering the plurality of sub-plots ($p_n$) from the source location $S$, where each sub-plot is covered only once in the path. The intermediate optimal path ($OP_i$) refers the smallest distance to cover the plurality of sub-plots ($p_n$) from the source location $S$.

Though the Christofides algorithm is discussed in detail to determine the intermediate optimal path ($OP_i$) covering the plurality of sub-plots ($p_n$) from the source location $S$, however, scope of the present disclosure is not limited to the Christofides algorithm and the present disclosure may employ any other heuristic optimal routing algorithm in place of the Christofides algorithm, such as Nearest Neighbor algorithm, the Greedy algorithm, Brute-Force approach, Branch and Bound method, Tabu search, Simulated annealing, Genetic algorithm, and so on.

At step 310 of the method 300, the one or more hardware processors 104 of the system 100 are configured to form one or more intermediate clusters from the plurality of sub-plots ($p_n$), using the intermediate optimal path ($OP_i$), based on satisfying a predefined cluster criteria, through the intermediate clusters determining unit 206b. Each intermediate cluster of the one or more intermediate clusters comprises one or more sub-plots out of the plurality of sub-plots ($p_n$). The number of the one or more sub-plots present in each intermediate cluster may be same or different. Further, each intermediate cluster includes unique sub-plots, i.e., each sub-plot is present only in one intermediate cluster.

The predefined cluster criteria includes (i) a total time required to complete the one or more intermediate clusters is less than the total time to complete the one or more agricultural activities in the plurality of sub-plots, (ii) a total man-day hours of each farm worker to complete the one or more intermediate clusters is less than the maximum man-day hours of each farm worker, and (iii) a total distance to complete each intermediate cluster by each farm worker, from the source location, is minimum. The total time required to complete the one or more intermediate clusters is calculated using the predefined completion time for completing the one or more agricultural activities for the unit area by each farm worker and the predefined traversing time for traversing the unit area by each farm worker, received at step 302 of the method 300.

However, the one or more intermediate clusters may not be uniform with respect to the total area of the intermediate cluster. For example, the total area of one intermediate cluster may be much higher compared to another intermediate cluster. Hence the total area of each intermediate cluster has to be uniform, so that that optimal coverage plan determined is efficient and reliable.

For example, there are 10 sub-plots ($p_1$, $p_2$ ..., $p_{10}$) present in the plot $P$ having the sub-plot area of sub-plot $p_1$ is 12 Square yards, the sub-plot area of sub-plot $p_2$ is 4 Square yards, the sub-plot area of sub-plot $p_3$ is 21 Square yards, the sub-plot area of sub-plot $p_4$ is 13 Square yards, the sub-plot area of sub-plot $p_5$ is 8 Square yards, the sub-plot area of sub-plot $p_6$ is 8 Square yards, the sub-plot area of sub-plot $p_7$ is 9 Square yards, the sub-plot area of sub-plot $p_8$ is 9 Square yards, the sub-plot area of sub-plot $p_9$ is 15 Square yards and the sub-plot area of sub-plot $p_{10}$ is 11 Square yards. Suppose 4 intermediate clusters $A, B, C, and D$, are formed as a result of the step 310 of the method 300 wherein, the intermediate cluster $A$ includes the sub-plots $p_1$, $p_4$, and $p_6$. The intermediate cluster $B$ includes the sub-plots $p_2$ and $p_8$. The intermediate cluster $C$ includes the sub-plots $p_3$ and $p_5$. The intermediate cluster $D$ includes the sub-plots $p_7$, $p_9$ and $p_{10}$. The same is presented in Table 2.

Table 2

| Intermediate Cluster Number | Sub-plot ID | Sub-plot area (Sq Yds) |
|---|---|---|
| A | $p_1$ | 12 |
| | $p_4$ | 13 |
| | $p_6$ | 8 |
| B | $p_2$ | 4 |
| | $p_8$ | 9 |
| C | $p_3$ | 21 |
| | $p_5$ | 8 |
| D | $p_7$ | 9 |
| | $p_9$ | 15 |
| | $p_{10}$ | 11 |

At step 312 of the method 300, the one or more hardware processors 104 of the system 100 are configured to determine one or more uniform clusters by applying a uniform distribution algorithm (UDA) on the one or more intermediate clusters. The uniform distribution algorithm (UDA) is present in the uniform clusters determining unit 206c Each uniform cluster comprises one or more sub-plots out of the plurality of sub-plots ($p_n$), such that the total area of each uniform cluster is mostly similar or same. Further, each uniform cluster includes unique sub-plots (from the ($p_n$)), i.e., each sub-plot is present only in one uniform cluster. Determining the one or more uniform clusters by applying the uniform distribution algorithm (UDA) on the one or more intermediate clusters, is explained in detail, through steps (a) through (h) as mentioned below.

At step (a), a total plot area of each intermediate cluster, is calculated by adding the sub-plot area of each sub-plot ($p_n$) present in the corresponding intermediate cluster. Table 2 mentioned at step 310 of the method 300 is re-written as Table 3 after calculating the total plot area of each intermediate cluster.

Table 3

| Intermediate Cluster Number | Sub-plot ID | Sub-plot area (Sq Yds) | Total plot area of each intermediate cluster |
|---|---|---|---|
| A | $p_1$ | 12 | |
| | $p_4$ | 13 | |
| | $p_6$ | 8 | 33 |
| B | $p_2$ | 4 | |
| | $p_8$ | 9 | 13 |
| C | $p_3$ | 21 | |
| | $p_5$ | 8 | 29 |
| D | $p_7$ | 9 | |
| | $p_9$ | 15 | |
| | $p_{10}$ | 11 | 35 |

At step (b), a standard deviation total plot area is calculated using the total plot area of each intermediate cluster of the one or more intermediate clusters. From the table 3, the standard deviation total plot area is calculated from (33, 13, 29, 35) is 9.983. At step (c), (i) the intermediate cluster having a largest total plot area, and (ii) the intermediate cluster having a smallest total plot area, among the one or more intermediate clusters, are identified, based on the total plot area of each intermediate cluster. If more than one intermediate clusters having the same largest total plot area or the largest total plot area is present, then one among them is randomly selected. From table 3, the intermediate cluster $D$ has the largest total plot area of 35 square yards. Similarly, the intermediate cluster $B$ has the largest total plot area of 13 square yards.

At step (d), (i) the sub-plot having the largest sub-plot area within the intermediate cluster having the largest total plot area, and (ii) the sub-plot having the smallest sub-plot area within the intermediate cluster having the smallest total plot area, are identified. From table 3, the sub-plot $p_9$ has the largest sub-plot area of 15 square yards within the intermediate cluster $D$ having the largest total plot area. Similarly, the sub-plot $p_2$ has the smallest sub-plot area of 4 square yards within the intermediate cluster $B$ having the smallest total plot area.

At step (e), the sub-plot having the largest sub-plot area within the intermediate cluster having the largest total plot area, is swapped with, the sub-plot having the smallest sub-plot area within the intermediate cluster having the smallest total plot area, to obtain one or more successive intermediate clusters. Table 4 shows the successive intermediate clusters after swapping from table 3.

Table 4

| Intermediate Cluster Number | Sub-plot ID | Sub-plot area (Sq Yds) |
|---|---|---|
| A | $p_1$ | 12 |
| | $P_4$ | 13 |
| | $p_6$ | 8 |
| B | $p_9$ | 15 |
| | $p_8$ | 9 |
| C | $p_3$ | 21 |
| | $p_5$ | 8 |
| D | $p_7$ | 9 |
| | $p_2$ | 4 |
| | $p_{10}$ | 11 |

Further, at step (f), the total plot area of each successive intermediate cluster, is calculated, by adding the sub-plot area of each sub-plot present in the successive intermediate cluster. Table 5 shows the total plot area of each successive intermediate cluster calculated from table 4.

Table 5

| Intermediate Cluster Number | Sub-plot ID | Sub-plot area (Sq Yds) | Total plot area of each intermediate cluster |
|---|---|---|---|
| A | $p_1$ | 12 | |
| | $p_4$ | 13 | |
| | $p_6$ | 8 | 33 |
| B | $p_9$ | 15 | |
| | $p_8$ | 9 | 24 |
| C | $p_3$ | 21 | |
| | $p_5$ | 8 | 29 |
| D | $p_7$ | 9 | |
| | $p_2$ | 4 | |
| | $p_{10}$ | 11 | 24 |

Next, at step (g), a successive standard deviation total plot area, is calculated using the total plot area of each successive intermediate cluster of the one or more successive intermediate clusters. From the table 5, the standard deviation total plot area is calculated from (33, 24, 29, 24) is 4.358.

Lastly, at step (h), the steps (c) through (g), are repeated, by taking the one or more successive intermediate clusters as the one or more intermediate clusters. For next iteration, until, the successive standard deviation total plot area is closest to a predefined threshold, to determine the one or more uniform clusters. The one or more uniform clusters are otherwise obtained from the one or more successive intermediate clusters having the corresponding successive standard deviation total plot area is closest to the predefined threshold. In an embodiment, predefined threshold may be 0 (which is the ideal value ensures uniform clusters having the same total plot area). The uniform distribution algorithm (UDA) ensures that the total plot area of each uniform cluster is similar or same.

At step 314 of the method 300, the one or more hardware processors 104 of the system 100 are configured to determine a final optimal path ($OP_F$) for each uniform cluster obtained at step 312 of the method 300. The final optimal path ($OP_F$) for each uniform cluster is determined to cover the one or more sub-plots present in the uniform cluster from the source location. The final optimal path ($OP_F$) for each uniform cluster is determined using the optimal routing algorithm such as the Christofides algorithm (heuristic algorithm) as explained at step 308 of the method 300 However only the sub-plots present in each uniform cluster are considered for determining the final optimal path for each uniform cluster. According to the Christofides algorithm, firstly, a second minimum spanning tree covering the plurality of sub-plots present in the corresponding uniform cluster and the source location, is determined based on the Euclidean distance ($d$) of each sub-plot with each other sub-plot present in the corresponding uniform cluster and the Euclidean distance ($d$) of each sub-plot present in the corresponding uniform cluster with the source location. In the second minimum spanning tree each vertex of one or more vertices represents either a source location or a sub-plot present in the corresponding uniform cluster. Hence the number of the one or more vertices is a sum the number of the sub-plots present in the corresponding uniform cluster and the source location. Further, each edge of one or more edges in the second minimum spanning tree represents a connection between either (i) the source location and the sub-plot present in the corresponding uniform cluster, or (ii) between two sub-plots present in the corresponding uniform cluster.

Next, one or more odd vertices out of the one or more vertices present in the second minimum spanning tree, is calculated based on a degree of each vertex. In an embodiment, the degree of each vertex is calculated based on the number of edges connected to the corresponding vertex. If the number of the edges connected to a vertex is even, then such vertex is referred as an even vertex. Similarly, If the number of the edges connected to the vertex is odd, then such vertex is referred as the odd vertex.

Further, one or more perfect matching sub-graphs, are created from the plurality of odd vertices. Each perfect matching sub-graph comprises at least two odd vertices from the one or more odd vertices, if the number of the one or more odd vertices is more than two. Next, the one or more perfect matching sub-graphs are combined to the second minimum spanning tree, to calculate a second Eulerian circuit. Lastly, one or more duplicate vertices in the second Eulerian circuit are removed to create a second Hamiltonian circuit. The second Hamiltonian circuit represents the final optimal path ($OP_F$) covering the one or more sub-plots present in the corresponding uniform cluster from the source location, where each sub-plot is covered only once in the path. The final optimal path ($OP_F$) refers the smallest distance to cover the one or more sub-plots present in the corresponding uniform cluster from the source location.

Though the Christofides algorithm is discussed in detail to determine the final optimal path ($OP_F$) for each uniform cluster, however, the scope of the present disclosure is not limited to Christofides algorithm and the present disclosure may employ any other heuristic optimal routing algorithm in place of the Christofides algorithm, such as Nearest Neighbor Algorithm, the Greedy Algorithm, and so on.

At step 316 of the method 300, the one or more hardware processors 104 of the system 100 are configured to generate the optimal coverage plan for the plurality of sub-plots received at step 302 of the method 300, based on a number of the one or more farm workers, the agricultural activity type required for each sub-plot, using the one or more uniform clusters determined at step 312 of the method 300 and the final optimal path determined for each uniform cluster at step 314 of the method 300.

The optimal coverage plan comprises a per day schedule of each farm worker allocated to the one or more uniform clusters to perform the agricultural activity type required for each sub-plot present in the uniform cluster. An exemplary optimal coverage plan is shown in table 6 which is derived from table 5 considering an exemplary final optimal path for each uniform cluster, considering two farm workers.

Table 6

| Uniform Cluster Number | Farm worker ID | Day of working | Sub-plot ID | Type of Work |
|---|---|---|---|---|
| A | 1 | 1 st | $p_1$ | Harvesting |
| | 1 | 1 st | $p_4$ | Harvesting |
| | 1 | 1 st | $p_6$ | Pruning |
| B | 2 | 1 st | $p_2$ | Applying fertilizer |
| | 2 | 1st | $p_8$ | Pruning |
| C | 1 | 2nd | $p_3$ | Pruning |
| | 1 | 2nd | $p_5$ | Applying fertilizer |
| D | 2 | 2nd | $p_7$ | Sowing |
| | 2 | 2nd | $p_9$ | Growth monitoring |
| | 2 | 2nd | $p_{10}$ | Applying fertilizer |

From table 6, the uniform cluster A is assigned to the first farm worker to complete in first day. The first farm worker has to start from the source location S to reach first the sub-plot $p_1$ to perform the harvesting activity. Then the first farm worker has to move from the sub-plot $p_1$ to reach the sub-plot $p_4$ to perform the harvesting activity. Further, the first farm worker has to move from the sub-plot $p_4$ to reach the sub-plot $p_6$ to perform the pruning activity. Once the coverage schedule for the particular day as per the maximum man-day hours are completed, then the first farm worker may go to the source location S. In the second day, the first farm worker has to start again from the source location S to reach first the sub-plot $p_3$ to perform pruning activity, and so on.

As a summary, the present disclosure, determines the optimal coverage plan satisfying equation 2 which ensures all the agricultural activities are completed under a fixed time window ($T_{total}$):

$$\frac{t_a \times A_{total} + t_{walking} \times d_{total}}{t_{max} \times m} \leqslant T_{total} \quad \text{-----------------} \quad (2)$$

wherein, $A_{total} = \sum_{i=1}^{|P|} a_i$, the area of all sub-plots in the plot P and m is the number of farm workers, $d_{total}$ is the total traversing distance from source location to the sub-plots and reach back to the source location, and further:

$$t_a \geq t_{walking}$$

$$a_i, t_a, t_{walking}, d_{total} \in \mathbb{R}_*^+$$

$$\mathbb{R}_*^+ = \{x \in \mathbb{R} \vee x > 0\}$$

$$P, m \in \mathbb{N}$$

Further, the optimal coverage plan is determined for only the sub-plots that are available for performing the agricultural activities. For example, if the sub-plot is not beyond the safe-harvest interval after pesticide application, then such a sub-plot is not available for harvest and such sub-plot is discarded before determining the optimal coverage plan. Further, in case of any unforeseen conditions such as natural calamities, if any sub-plots are not available in the middle of the optimal coverage plan, then such sub-plots are not considered and the revised optimal coverage plan is determined for smooth and continuous flow of performing the agricultural activities without any interruptions. The present disclosure considers the following constraints for modeling the optimal coverage plan:

1. The farm worker will be only involved in a combination of activities or a single activity based on the requirement
2. In the absence of any stress incidents or the unforeseen conditions, the present disclosure generates the optimal coverage plan to be followed to cover the entire set of sub-plots given the objective.
3. In the presence of any unforeseen incidents such as pests and associated operations, a random set of sub-plots will be unlikely to be available for a specific period of time. The present disclosure will also consider this data and exclude these specific sub-plots from the visiting list of sub-plots for that interval.
4. The sub-plots may or may not be adjacent to each other.

Example scenario:

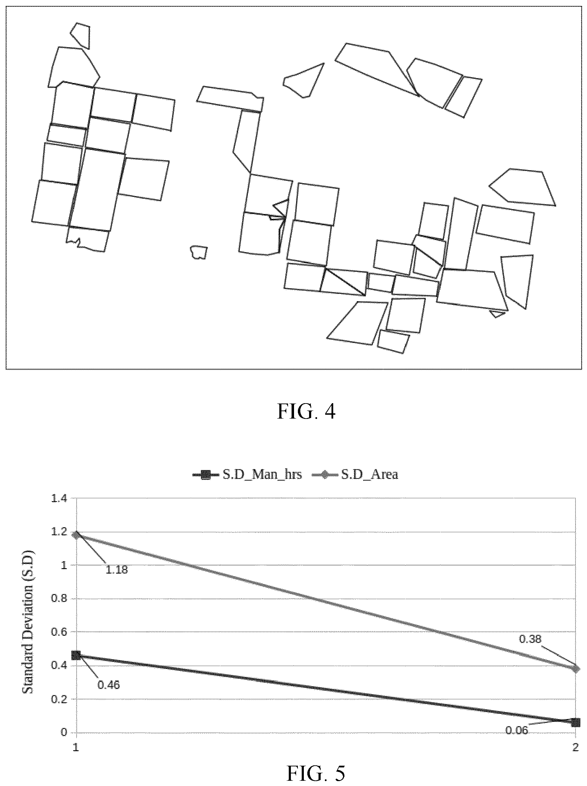

FIG. 4 is an exemplary plot diagram for analyzing the performance of the present disclosure. As shown in FIG. 4, the exemplary plot diagram consists of 41 sub-plots where the agricultural activities to be performed. To measure the performance of the present disclosure, the standard deviation of man-day hours for doing the agricultural activity (for example, harvesting) on the above mentioned 41 sub-plots (from FIG. 4) as an output of the present disclosure is compared to the standard deviation of the man-day hours for doing the same agricultural activity (harvesting) for the above mentioned 41 sub-plots as the output of a random traversal of the 41 sub-plots is performed. Along with this, the standard deviation of areas on which the agricultural activity is performed for the above mentioned 41 sub-plots as an output of the present disclosure is compared to the standard deviation of areas on which the same agricultural activity is performed for the above mentioned 41 sub-plots as the output of the random traversal of the sub-plots is performed. FIG. 5 is a graph showing a variation in standard deviation of man-day hours and plot area, in accordance with some embodiments of the present disclosure. As shown in FIG. 5, the black line indicates the variation of the standard deviation of man-day hours and the grey line indicates the variation of the standard deviation of the plot area on which some agricultural activities are performed. The percentage improvement in the standard deviation for the man-day hours achieved is 86.96 % after using the present disclosure and the percentage improvement in the standard deviation of areas on which the agricultural activity (harvesting) performed after using the present disclosure achieved is 67.79 %.

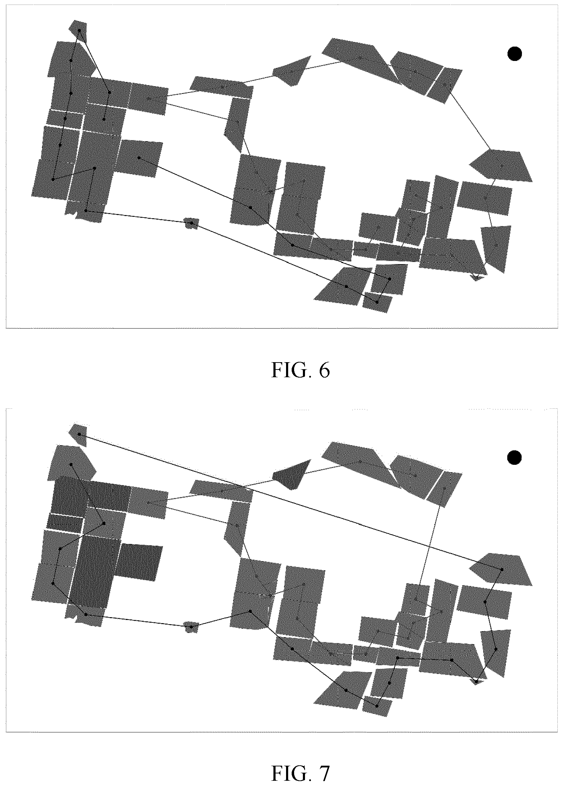

FIG. 6 is a plot diagram showing the optimal coverage plan for the exemplary plot diagram of FIG. 4 during normal scenarios, in accordance with some embodiments of the present disclosure. As shown in FIG. 6, during normal scenarios when all the sub-plots are available for performing any agricultural activity, the final optimal coverage plan can be seen for two uniform clusters with the two farm workers, marked in black and grey respectively. The black colored circle indicates the source location.

FIG. 7 is a plot diagram showing the optimal coverage plan for the exemplary plot diagram of FIG. 4 during unforeseen scenarios, in accordance with some embodiments of the present disclosure. As shown in FIG. 7, during unforeseen scenarios, the final optimal coverage plan can be seen for two uniform clusters with the two farm workers, marked in black and grey respectively. It is observed that some of the sub-plots in the plot are unavailable for performing the agricultural activity and such sub-plots are ignored for formulating the optimal coverage plan with the available sub-plots only.

Thus, the present disclosure is proven to be beneficial in multiple aspects. The cost of farm workers is reduced and help to effectively plan out the daily chores based on the plot size and number of the sub-plots. Field visiting for manual harvesting and other agricultural activities not only increases the quality of the crops but also helps in monitoring them. Timely reporting of pest or disease infestations and nutrient deficiencies helps in giving recommendations for prompt preventive measures involving spraying of pesticides and fertilizers to reduce any unwanted loss of yield.

The present disclosure helps in finding the optimum coverage plan for multiple agricultural activities which is essential to preserve the quality of the crops where field robots or manual harvester would prove inefficient. The present disclosure can also be extended to automated and mechanized harvesting. Along with the harvesting the farm workers also can track down the growth of the plants on a daily basis and provide necessary suggestions to boost the productivity. The systems and methods of the present disclosure may be infused with other decision support systems involving Internet of Things (IoT) and Artificial Intelligence (AI) to further provide intelligence on the farming ecosystem for greater yield and the production.

The methods and systems of the present disclosure generates the optimal coverage plan for deployment to perform agricultural activities by the farm workers, considering various constraints especially the human resource constrains and within the predefined time. The day-to-day agricultural activities including but not limited to harvesting, sowing, spraying, applying fertilizer, pruning and tillage are considered, to compute the final coverage plan that needs to be implemented by the farm workers. The present disclosure employs the uniform distribution algorithm to evenly distribute the work for each farm worker and the sub-plot area to balance the man-day hours efficiently. The present disclosure may help the farm workers to decide the order by which the sub-plots needs to be visited in the optimal time and effort. Further, the present disclosure may help the farm workers to complete his daily agricultural activities in an efficient way and is responsive to dynamic introduction of challenges and constraints that may occur in the future.

Though the present disclosure is described in detail keeping mind the human resource farm workers, the scope of the present disclosure is not limited to the human resource farm workers. The same disclosure may be implemented for only mechanized, electric, or electronic resources, farm equipments, or in a combination with the farm workers.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g. any kind of computer like a server or a personal computer, or the like, or any combination thereof. The device may also include means which could be e.g. hardware means like e.g. an application-specific integrated circuit (ASIC), a field-programmable gate array (FPGA), or a combination of hardware and software means, e.g. an ASIC and an FPGA, or at least one microprocessor and at least one memory with software modules located therein. Thus, the means can include both hardware means and software means. The method embodiments described herein could be implemented in hardware and software. The device may also include software means. Alternatively, the embodiments may be implemented on different hardware devices, e.g. using a plurality of CPUs.

The embodiments herein can comprise hardware and software elements. The embodiments that are implemented in software include but are not limited to, firmware, resident software, microcode, etc. The functions performed by various modules described herein may be implemented in other modules or combinations of other modules. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

**Claims**

1. A processor-implemented method (300) for generating an optimal coverage plan to perform one or more agricultural activities, the method comprising:

receiving (302), via one or more hardware processors, (104) one or more input parameters for generating the optimal coverage plan, wherein the one or more input parameters comprising: a plurality of sub-plots present in a plot where the one or more agricultural activities to be performed, information related to one or more farm workers in the plot, wherein the information is related to human resources available to perform the one or more agricultural activities in each sub-plot of the plurality of sub-plots, a set of sub-plot coordinate points for each sub-plot of the plurality of sub-plots, a set of coordinates of a source location, wherein the source location represents a point from which each farm worker of the one or more farm workers start to reach each sub-plot to perform the one or more agricultural activities, a maximum man-day hours of each farm worker, a total time to complete the one or more agricultural activities in the plurality of sub-plots, a predefined completion time for completing the one or more agricultural activities for a unit area by each farm worker, a predefined traversing time for traversing the unit area by each farm worker, and one or more agricultural activity types required for each sub-plot;
calculating (304), via the one or more hardware processors (104), (i) a sub-plot area of each sub-plot of the plurality of sub-plots, and (ii) a centroid of each sub-plot of the plurality of sub-plots, using the set of sub-plot coordinate points associated with each sub-plot;
calculating (306), via the one or more hardware processors (104), (i) an Euclidean distance of each sub-plot with each other sub-plot of the plurality of sub-plots, based on the centroid associated with each sub-plot, and (ii) the Euclidean distance of each sub-plot with the source location, based on the centroid associated with each sub-plot and the set of coordinates of the source location ;
determining (308), via the one or more hardware processors (104), an intermediate optimal path covering the plurality of sub-plots from the source location, using an optimal routing algorithm, based on the Euclidean distance of each sub-plot with each other sub-plot of the plurality of sub-plots and the Euclidean distance of each sub-plot with the source location;
forming (310), via the one or more hardware processors (104), one or more intermediate clusters from the plurality of sub-plots, using the intermediate optimal path, based on satisfying a predefined cluster criteria, wherein each intermediate cluster of the one or more intermediate clusters comprises one or more sub-plots out of the plurality of sub-plots;
determining (312), via the one or more hardware processors (104), one or more uniform clusters by applying a uniform distribution algorithm UDA on the one or more intermediate clusters, wherein

each uniform cluster comprises one or more sub-plots out of the plurality of sub-plots , and
determining the one or more uniform clusters, comprising:

(a) calculating a total plot area of each intermediate cluster, by adding the sub-plot area of each sub-plot present in the intermediate cluster;
(b) calculating a standard deviation total plot area, using the total plot area of each intermediate cluster of the one or more intermediate clusters;
(c) identifying (i) the intermediate cluster having a largest total plot area, and (ii) the intermediate cluster having a smallest total plot area, among the one or more intermediate clusters, based on the total plot area of each intermediate cluster;
(d) identifying (i) the sub-plot having the largest sub-plot area within the intermediate cluster having the largest total plot area, and (ii) the sub-plot having the smallest sub-plot area within the intermediate cluster having the smallest total plot area;
(e) swapping the sub-plot having the largest sub-plot area within the intermediate cluster having the largest total plot area, with, the sub-plot having the smallest sub-plot area within the intermediate cluster having the smallest total plot area, to obtain one or more successive intermediate clusters;
(f) calculating the total plot area of each successive intermediate cluster, by adding the sub-plot area of each sub-plot present in the successive intermediate cluster;
(g) calculating a successive standard deviation total plot area, using the total plot area of each successive intermediate cluster of the one or more successive intermediate clusters; and
(h) repeating the steps (c) through (g), by taking the one or more successive intermediate clusters as the one or more intermediate clusters, until, the successive standard deviation total plot area is closest to a predefined threshold, to determine the one or more uniform clusters;

determining (314), via the one or more hardware processors (104), a final optimal path for each uniform cluster, using the optimal routing algorithm, based on the Euclidean distance of each sub-plot with each other sub-plot of the one or more sub-plots present in the uniform cluster and the Euclidean distance of each sub-plot present in the uniform cluster with the source location, wherein the final optimal path for each uniform cluster is determined to cover the one or more sub-plots present in the uniform cluster from the source location; and

generating (316), via the one or more hardware processors (104), the optimal coverage plan for the plurality of sub-plots, based on a number of the one or more farm workers, the agricultural activity type required for each sub-plot, using the one or more uniform clusters and the final optimal path determined for each uniform cluster.

2. The method (300) of claim 1, wherein determining the intermediate optimal path covering the plurality of sub-plots from the source location, using the optimal routing algorithm, based on the Euclidean distance of each sub-plot with each other sub-plot of the plurality of sub-plots and the Euclidean distance of each sub-plot with the source location, comprising:

determining a first minimum spanning tree covering the plurality of sub-plots and the source location, based on the Euclidean distance of each sub-plot with each other sub-plot of the plurality of sub-plots and the Euclidean distance of each sub-plot with the source location, wherein each vertex of a plurality of vertices in the first minimum spanning tree represents either the source location or the sub-plot of the plurality of sub-plots, and each edge of a plurality of edges in the first minimum spanning tree represents a connection between either (i) the source location and the sub-plot, or (ii) two sub-plots;

calculating a plurality of odd vertices out of the plurality of vertices present in the first minimum spanning tree, based on a degree of each vertex;

creating one or more perfect matching sub-graphs, from the plurality of odd vertices, wherein each perfect matching sub-graph comprises at least two odd vertices from the plurality of odd vertices;

combining the one or more perfect matching sub-graphs to the first minimum spanning tree, to calculate a first Eulerian circuit; and

removing one or more duplicate vertices in the first Eulerian circuit to create a first Hamiltonian circuit, wherein the first Hamiltonian circuit represents the intermediate optimal path covering the plurality of sub-plots from the source location.

3. The method (300) of claim 1, wherein the predefined cluster criteria comprises:

(i) a total time required to complete the one or more intermediate clusters is less than the total time to complete the one or more agricultural activities in the plurality of sub-plots;

(ii) a total man-day hours of each farm worker to complete the one or more intermediate clusters is less than the maximum man-day hours of each farm worker; and

(iii) a total distance to complete each intermediate cluster by each farm worker, from the source location, is minimum.

4. The method (300) of claim 3, wherein the total time required to complete the one or more intermediate clusters is calculated using the predefined completion time for completing the one or more agricultural activities for a unit area by each farm worker and the predefined traversing time for traversing the unit area by each farm worker.

5. The method (300) of claim 1, wherein the optimal coverage plan comprises a per day schedule of each farm worker allocated to the one or more uniform clusters to perform the agricultural activity type required for each sub-plot present in the uniform cluster.

6. The method (300) of claim 1, wherein determining the final optimal path for each uniform cluster, using the optimal routing algorithm, comprising:

determining a second minimum spanning tree covering the one or more sub-plots present in each uniform cluster and the source location, based on the Euclidean distance of each sub-plot with each other sub-plot present in the uniform cluster and the Euclidean distance of each sub-plot with the source location, wherein each vertex of one or more vertices in the second minimum spanning tree represents either a source location or a sub-plot present in the uniform cluster, and each edge of one or more edges in the second minimum spanning tree represents a connection between either (i) the source location and the sub-plot, or (ii) two sub-plots; calculating one or more odd vertices out of the one or more vertices present in the second minimum spanning tree, based on a degree of each vertex;

creating one or more perfect matching sub-graphs, from the one or more odd vertices, wherein each perfect matching sub-graph comprises at least two odd vertices from the one or more odd vertices, if a number of the one or more odd vertices is more than two;

combining the one or more perfect matching sub-graphs to the second minimum spanning tree, to calculate a second Eulerian circuit; and

removing one or more duplicate vertices in the second Eulerian circuit to create a second Hamiltonian circuit, wherein the second Hamiltonian circuit represents the final optimal path corresponding to the uniform cluster.

7. A system (100) for generating an optimal coverage plan to perform one or more agricultural activities, the system (100) comprising:

a memory (102) storing instructions;
one or more Input/Output (I/O) interfaces (106); and
one or more hardware processors (104) coupled to the memory (102) via the one or more I/O interfaces (106), wherein the one or more hardware processors (104) are configured by the instructions to:

receive one or more input parameters for generating the optimal coverage plan, wherein the one or more input parameters comprising: a plurality of sub-plots present in a plot where the one or more agricultural activities to be performed, information related to one or more farm workers in the plot, wherein the information is human resources available to perform the one or more agricultural activities in each sub-plot of the plurality of sub-plots, a set of sub-plot coordinate points for each sub-plot of the plurality of sub-plots, a set of coordinates of a source location, wherein the source location represents a point from which each farm worker of the one or more farm workers start to reach each sub-plot to perform the one or more agricultural activities, a maximum man-day hours of each farm worker, a total time to complete the one or more agricultural activities in the plurality of sub-plots, a predefined completion time for completing the one or more agricultural activities for a unit area by each farm worker, a predefined traversing time for traversing the unit area by each farm worker, and an agricultural activity type required for each sub-plot;

calculate (i) a sub-plot area of each sub-plot of the plurality of sub-plots, and (ii) a centroid of each sub-plot of the plurality of sub-plots, using the set of sub-plot coordinate points associated with each sub-plot;

calculate (i) an Euclidean distance of each sub-plot with each other sub-plot of the plurality of sub-plots, based on the centroid associated with each sub-plot, and (ii) the Euclidean distance of each sub-plot with the source location, based on the centroid associated with each sub-plot and the set of coordinates of the source location;

determine an intermediate optimal path covering the plurality of sub-plots from the source location, using an optimal routing algorithm, based on the Euclidean distance of each sub-plot with each other sub-plot of the plurality of sub-plots and the Euclidean distance of each sub-plot with the source location;

form one or more intermediate clusters from the plurality of sub-plots, using the intermediate optimal path, based on satisfying a predefined cluster criteria, wherein each intermediate cluster of the one or more intermediate clusters comprises one or more sub-plots out of the plurality of sub-plots;

determine one or more uniform clusters by applying a uniform distribution algorithm UDA on the one or more intermediate clusters, wherein

each uniform cluster comprises one or more sub-plots out of the plurality of sub-plots,
determine the one or more uniform clusters, wherein the determination comprises:

(a) calculating a total plot area of each intermediate cluster, by adding the sub-plot area of each sub-plot present in the intermediate cluster;
(b) calculating a standard deviation total plot area, using the total plot area of each intermediate cluster of the one or more intermediate clusters;
(c) identifying (i) the intermediate cluster having a largest total plot area, and (ii) the intermediate cluster having a smallest total plot area, among the one or more intermediate clusters, based on the total plot area of each intermediate cluster;
(d) identifying (i) the sub-plot having the largest sub-plot area within the intermediate cluster having the largest total plot area, and (ii) the sub-plot having the smallest sub-plot area within the intermediate cluster having the smallest total plot area;
(e) swapping the sub-plot having the largest sub-plot area within the intermediate cluster having the largest total plot area, with, the sub-plot having the smallest sub-plot area within the intermediate cluster having the smallest total plot area, to obtain one or more successive intermediate clusters;

(f) calculating the total plot area of each successive intermediate cluster, by adding the sub-plot area of each sub-plot present in the successive intermediate cluster;

(g) calculating a successive standard deviation total plot area, using the total plot area of each successive intermediate cluster of the one or more successive intermediate clusters; and

(h) repeating the steps (c) through (g), by taking the one or more successive intermediate clusters as the one or more intermediate clusters, until, the successive standard deviation total plot area is closest to a predefined threshold, to determine the one or more uniform clusters;

determine a final optimal path for each uniform cluster, using the optimal routing algorithm, based on the Euclidean distance of each sub-plot with each other sub-plot of the one or more sub-plots present in the uniform cluster and the Euclidean distance of each sub-plot present in the uniform cluster with the source location, wherein the final optimal path for each uniform cluster is determined to cover the one or more sub-plots present in the uniform cluster from the source location; and

generate the optimal coverage plan for the plurality of sub-plots, based on a number of the one or more farm workers, the agricultural activity type required for each sub-plot, using the one or more uniform clusters and the final optimal path determined for each uniform cluster.

8. The system (100) of claim 7 wherein the one or more hardware processors (104) are configured to determine the intermediate optimal path covering the plurality of sub-plots from the source location, using the optimal routing algorithm, based on the Euclidean distance of each sub-plot with each other sub-plot of the plurality of sub-plots and the Euclidean distance of each sub-plot with the source location, by:

determining a first minimum spanning tree covering the plurality of sub-plots and the source location, based on the Euclidean distance of each sub-plot with each other sub-plot of the plurality of sub-plots and the Euclidean distance of each sub-plot with the source location, wherein each vertex of a plurality of vertices in the first minimum spanning tree represents either the source location or the sub-plot of the plurality of sub-plots, and each edge of a plurality of edges in the first minimum spanning tree represents a connection between either (i) the source location and the sub-plot, or (ii) two sub-plots;

calculating a plurality of odd vertices out of the plurality of vertices present in the first minimum spanning tree, based on a degree of each vertex;

creating one or more perfect matching sub-graphs, from the plurality of odd vertices, wherein each perfect matching sub-graph comprises at least two odd vertices from the plurality of odd vertices;

combining the one or more perfect matching sub-graphs to the first minimum spanning tree, to calculate a first Eulerian circuit; and

removing one or more duplicate vertices in the first Eulerian circuit to create a first Hamiltonian circuit, wherein the first Hamiltonian circuit represents the intermediate optimal path covering the plurality of sub-plots from the source location.

9. The system (100) of claim 7, wherein the predefined cluster criteria comprises:

(i) a total time required to complete the one or more intermediate clusters is less than the total time to complete the one or more agricultural activities in the plurality of sub-plots;

(ii) a total man-day hours of each farm worker to complete the one or more intermediate clusters is less than the maximum man-day hours of each farm worker; and

(iii) a total distance to complete each intermediate cluster by each farm worker, from the source location, is minimum.

10. The system (100) of claim 9, wherein the total time required to complete the one or more intermediate clusters is calculated using the predefined completion time for completing the one or more agricultural activities for a unit area by each farm worker and the predefined traversing time for traversing the unit area by each farm worker.

11. The system (100) of claim 7, wherein the optimal coverage plan comprises a per day schedule of each farm worker allocated to the one or more uniform clusters to perform the agricultural activity type required for each sub-plot present in the uniform cluster.

12. The system (100) of claim 7, wherein the one or more hardware processors (104) are configured to determine the final optimal path for each uniform cluster, using the optimal routing algorithm, by:

determining a second minimum spanning tree covering the one or more sub-plots present in each uniform cluster and the source location, based on the Euclidean distance of each sub-plot with each other sub-plot present in the uniform cluster and the Euclidean distance of each sub-plot with the source location, wherein each vertex of one or more vertices in the second minimum spanning tree represents either a source location or a sub-plot present in the uniform cluster, and each edge of one or more edges in the second minimum spanning tree represents a connection between either (i) the source location and the sub-plot, or (ii) two sub-plots; calculating one or more odd vertices out of the one or more vertices present in the second minimum spanning tree, based on a degree of each vertex;

creating one or more perfect matching sub-graphs, from the one or more odd vertices, wherein each perfect matching sub-graph comprises at least two odd vertices from the one or more odd vertices, if a number of the one or more odd vertices is more than two;

combining the one or more perfect matching sub-graphs to the second minimum spanning tree, to calculate a second Eulerian circuit; and

removing one or more duplicate vertices in the second Eulerian circuit to create a second Hamiltonian circuit, wherein the second Hamiltonian circuit represents the final optimal path corresponding to the uniform cluster.

13. One or more non-transitory machine-readable information storage mediums comprising one or more instructions which when executed by one or more hardware processors cause:

receiving, one or more input parameters for generating the optimal coverage plan, wherein the one or more input parameters comprising: a plurality of sub-plots present in a plot where the one or more agricultural activities to be performed, information related to one or more farm workers in the plot, wherein the information is related to human resources available to perform the one or more agricultural activities in each sub-plot of the plurality of sub-plots, a set of sub-plot coordinate points for each sub-plot of the plurality of sub-plots, a set of coordinates of a source location wherein the source location represents a point from which each farm worker of the one or more farm workers start to reach each sub-plot to perform the one or more agricultural activities, a maximum man-day hours of each farm worker, a total time to complete the one or more agricultural activities in the plurality of sub-plots, a predefined completion time for completing the one or more agricultural activities for a unit area by each farm worker, a predefined traversing time for traversing the unit area by each farm worker, and one or more agricultural activity types required for each sub-plot;

calculating, (i) a sub-plot area of each sub-plot of the plurality of sub-plots, and (ii) a centroid of each sub-plot of the plurality of sub-plots, using the set of sub-plot coordinate points associated with each sub-plot;

calculating, (i) an Euclidean distance of each sub-plot with each other sub-plot of the plurality of sub-plots, based on the centroid associated with each sub-plot, and (ii) the Euclidean distance of each sub-plot with the source location, based on the centroid associated with each sub-plot and the set of coordinates of the source location;

determining, an intermediate optimal path covering the plurality of sub-plots from the source location, using an optimal routing algorithm, based on the Euclidean distance of each sub-plot with each other sub-plot of the plurality of sub-plots and the Euclidean distance of each sub-plot with the source location;

forming, one or more intermediate clusters from the plurality of sub-plots, using the intermediate optimal path, based on satisfying a predefined cluster criteria, wherein each intermediate cluster of the one or more intermediate clusters comprises one or more sub-plots out of the plurality of sub-plots;

determining, one or more uniform clusters by applying a uniform distribution algorithm UDA on the one or more intermediate clusters, wherein

each uniform cluster comprises one or more sub-plots out of the plurality of sub-plots,
determining the one or more uniform clusters, comprising:

(a) calculating a total plot area of each intermediate cluster, by adding the sub-plot area of each sub-plot present in the intermediate cluster;
(b) calculating a standard deviation total plot area, using the total plot area of each intermediate cluster of the one or more intermediate clusters;
(c) identifying (i) the intermediate cluster having a largest total plot area, and (ii) the intermediate cluster having a smallest total plot area, among the one or more intermediate clusters, based on the total plot area of each intermediate cluster;
(d) identifying (i) the sub-plot having the largest sub-plot area within the intermediate cluster having the largest total plot area, and (ii) the sub-plot having the smallest sub-plot area within the intermediate cluster having the smallest total plot area;
(e) swapping the sub-plot having the largest sub-plot area within the intermediate cluster having the largest total plot area, with, the sub-plot having the smallest sub-plot area within the intermediate cluster having the smallest total plot area, to obtain one or more successive intermediate clusters;

(f) calculating the total plot area of each successive intermediate cluster, by adding the sub-plot area of each sub-plot present in the successive intermediate cluster;

(g) calculating a successive standard deviation total plot area, using the total plot area of each successive intermediate cluster of the one or more successive intermediate clusters; and

(h) repeating the steps (c) through (g), by taking the one or more successive intermediate clusters as the one or more intermediate clusters, until, the successive standard deviation total plot area is closest to a predefined threshold, to determine the one or more uniform clusters;

determining, a final optimal path for each uniform cluster, using the optimal routing algorithm, based on the Euclidean distance of each sub-plot with each other sub-plot of the one or more sub-plots present in the uniform cluster and the Euclidean distance of each sub-plot present in the uniform cluster with the source location, wherein the final optimal path for each uniform cluster is determined to cover the one or more sub-plots present in the uniform cluster from the source location; and

generating, the optimal coverage plan for the plurality of sub-plots, based on a number of the one or more farm workers, the agricultural activity type required for each sub-plot, using the one or more uniform clusters and the final optimal path determined for each uniform cluster.

**Patentansprüche**

1. Prozessorimplementiertes Verfahren (300) zum Erzeugen eines optimalen Abdeckungsplans zum Durchführen einer oder mehrerer landwirtschaftlicher Aktivitäten, wobei das Verfahren Folgendes umfasst:

Empfangen (302), über einen oder mehrere Hardwareprozessoren (104), eines oder mehrerer Eingabeparameter zum Erzeugen des optimalen Abdeckungsplans, wobei der eine oder die mehreren Eingabeparameter Folgendes umfassen: eine Mehrzahl von Teilplots, die in einem Plot vorhanden sind, wo die eine oder die mehreren landwirtschaftlichen Aktivitäten durchgeführt werden sollen, Informationen, die sich auf einen oder mehrere landwirtschaftliche Arbeiter in dem Plot beziehen, wobei die Informationen sich auf menschliche Ressourcen beziehen, die verfügbar sind, um die eine oder die mehreren landwirtschaftlichen Aktivitäten in jedem Teilplot der Mehrzahl von Teilplots durchzuführen, einen Satz von Teilplot-Koordinatenpunkten für jeden Teilplot der Mehrzahl von Teilplots, einen Satz von Koordinaten eines Quellorts, wobei der Quellort einen Punkt darstellt, von dem aus jeder landwirtschaftliche Arbeiter des einen oder der mehreren landwirtschaftlichen Arbeiter beginnt, jeden Teilplot zu erreichen, um die eine oder die mehreren landwirtschaftlichen Aktivitäten durchzuführen, eine maximale Tagesarbeitszeit jedes landwirtschaftlichen Arbeiters, eine Gesamtzeit zum Abschließen der einen oder der mehreren landwirtschaftlichen Aktivitäten in der Mehrzahl von Teilplots, eine vordefinierte Abschlusszeit zum Abschließen der einen oder der mehreren landwirtschaftlichen Aktivitäten für einen Einheitsbereich durch jeden landwirtschaftlichen Arbeiter, eine vordefinierte Durchlaufzeit zum Durchlaufen des Einheitsbereichs durch jeden landwirtschaftlichen Arbeiter und einen oder mehrere landwirtschaftliche Aktivitätstypen, die für jeden Teilplot erforderlich sind;

Berechnen (304), über den einen oder die mehreren Hardwareprozessoren (104), (i) eines Teilplot-Bereichs jedes Teilplots der Mehrzahl von Teilplots und (ii) eines Schwerpunkts jedes Teilplots der Mehrzahl von Teilplots unter Verwendung des Satzes von Teilplot-Koordinatenpunkten, die jedem Teilplot zugeordnet sind;

Berechnen (306), über den einen oder die mehreren Hardwareprozessoren (104), (i) eines euklidischen Abstands jedes Teilplots zu jedem anderen Teilplot der Mehrzahl von Teilplots basierend auf dem Schwerpunkt, der jedem Teilplot zugeordnet ist, und (ii) des euklidischen Abstands jedes Teilplots zu dem Quellort basierend auf dem Schwerpunkt, der jedem Teilplot zugeordnet ist, und dem Satz von Koordinaten des Quellorts;

Bestimmen (308), über den einen oder die mehreren Hardwareprozessoren (104), eines optimalen Zwischenpfads, der die Mehrzahl von Teilplots von dem Quellort abdeckt, unter Verwendung eines optimalen Routing-Algorithmus basierend auf dem euklidischen Abstand jedes Teilplots zu jedem anderen Teilplot der Mehrzahl von Teilplots und dem euklidischen Abstand jedes Teilplots zu dem Quellort;

Bilden (310), über den einen oder die mehreren Hardwareprozessoren (104), eines oder mehrerer Zwischen-Cluster aus der Mehrzahl von Teilplots unter Verwendung des optimalen Zwischenpfads basierend auf dem Erfüllen eines vordefinierten Cluster-Kriteriums, wobei jedes Zwischen-Cluster des einen oder der mehreren Zwischen-Cluster einen oder mehrere Teilplots aus der Mehrzahl von Teilplots umfasst;

Bestimmen (312), über den einen oder die mehreren Hardwareprozessoren (104), eines oder mehrerer einheitlicher Cluster durch Anwenden eines einheitlichen Verteilungsalgorithmus UDA auf den einen oder die mehreren Zwischen-Cluster, wobei

jedes einheitliche Cluster einen oder mehrere Teilplots aus der Mehrzahl von Teilplots umfasst, und Bestimmen des einen oder der mehreren einheitlichen Cluster, umfassend:

(a) Berechnen eines Gesamtplotbereichs jedes Zwischen-Clusters durch Addieren des Teilplotbereichs jedes Teilplots, der in dem Zwischen-Cluster vorhanden ist;

(b) Berechnen eines Standardabweichungs-Gesamtplotbereichs unter Verwendung des Gesamtplotbereichs jedes Zwischen-Clusters des einen oder der mehreren Zwischen-Cluster;

(c) Identifizieren (i) des Zwischen-Clusters mit einem größten Gesamtplotbereich und (ii) des Zwischen-Clusters mit einem kleinsten Gesamtplotbereich unter dem einen oder den mehreren Zwischen-Clustern basierend auf dem Gesamtplotbereich jedes Zwischen-Clusters;

(d) Identifizieren (i) des Teilplots mit dem größten Teilplotbereich innerhalb des Zwischen-Clusters mit dem größten Gesamtplotbereich und (ii) des Teilplots mit dem kleinsten Teilplotbereich innerhalb des Zwischen-Clusters mit dem kleinsten Gesamtplotbereich;

(e) Austauschen des Teilplots mit dem größten Teilplotbereich innerhalb des Zwischen-Clusters mit dem größten Gesamtplotbereich mit dem Teilplot mit dem kleinsten Teilplotbereich innerhalb des Zwischen-Clusters mit dem kleinsten Gesamtplotbereich, um ein oder mehrere aufeinanderfolgende Zwischen-Cluster zu erhalten;

(f) Berechnen des Gesamtplotbereichs jedes aufeinanderfolgenden Zwischen-Clusters durch Addieren des Teilplotbereichs jedes Teilplots, der in dem aufeinanderfolgenden Zwischen-Cluster vorhanden ist;

(g) Berechnen eines aufeinanderfolgenden Standardabweichungs-Gesamtplotbereichs unter Verwendung des Gesamtplotbereichs jedes aufeinanderfolgenden Zwischen-Clusters des einen oder der mehreren aufeinanderfolgenden Zwischen-Cluster; und

(h) Wiederholen der Schritte (c) bis (g) durch Nehmen des einen oder der mehreren aufeinanderfolgenden Zwischen-Cluster als das eine oder die mehreren Zwischen-Cluster, bis der aufeinanderfolgende Standardabweichungs-Gesamtplotbereich einem vordefinierten Schwellenwert am nächsten ist, um das eine oder die mehreren einheitlichen Cluster zu bestimmen;

Bestimmen (314), über den einen oder die mehreren Hardwareprozessoren (104), eines endgültigen optimalen Pfads für jedes einheitliche Cluster unter Verwendung des optimalen Routing-Algorithmus basierend auf dem euklidischen Abstand jedes Teilplots zu jedem anderen Teilplot des einen oder der mehreren Teilplots, die in dem einheitlichen Cluster vorhanden sind, und dem euklidischen Abstand jedes Teilplots, der in dem einheitlichen Cluster vorhanden ist, zu dem Quellort, wobei der endgültige optimale Pfad für jedes einheitliche Cluster bestimmt wird, um den einen oder die mehreren Teilplots, die in dem einheitlichen Cluster vorhanden sind, von dem Quellort abzudecken; und

Erzeugen (316), über den einen oder die mehreren Hardwareprozessoren (104), des optimalen Abdeckungsplans für die Mehrzahl von Teilplots basierend auf einer Anzahl des einen oder der mehreren landwirtschaftlichen Arbeiter, dem landwirtschaftlichen Aktivitätstyp, der für jeden Teilplot erforderlich ist, unter Verwendung des einen oder der mehreren einheitlichen Cluster und des endgültigen optimalen Pfads, der für jedes einheitliche Cluster bestimmt wird.

2. Verfahren (300) nach Anspruch 1, wobei das Bestimmen des optimalen Zwischenpfads, der die Mehrzahl von Teilplots von dem Quellort abdeckt, unter Verwendung des optimalen Routing-Algorithmus basierend auf dem euklidischen Abstand jedes Teilplots zu jedem anderen Teilplot der Mehrzahl von Teilplots und dem euklidischen Abstand jedes Teilplots zu dem Quellort Folgendes umfasst:

Bestimmen eines ersten minimalen Spannbaums, der die Mehrzahl von Teilplots und den Quellort abdeckt, basierend auf dem euklidischen Abstand jedes Teilplots zu jedem anderen Teilplot der Mehrzahl von Teilplots und dem euklidischen Abstand jedes Teilplots zu dem Quellort, wobei jeder Scheitelpunkt einer Mehrzahl von Scheitelpunkten in dem ersten minimalen Spannbaum entweder den Quellort oder den Teilplot der Mehrzahl von Teilplots darstellt und jede Kante einer Mehrzahl von Kanten in dem ersten minimalen Spannbaum eine Verbindung zwischen entweder (i) dem Quellort und dem Teilplot oder (ii) zwei Teilplots darstellt;

Berechnen einer Mehrzahl von ungeraden Scheitelpunkten aus der Mehrzahl von Scheitelpunkten, die in dem ersten minimalen Spannbaum vorhanden sind, basierend auf einem Grad jedes Scheitelpunkts;

Erzeugen eines oder mehrerer perfekt passender Teilgraphen aus der Mehrzahl von ungeraden Scheitelpunkten, wobei jeder perfekt passende Teilgraph mindestens zwei ungerade Scheitelpunkte aus der Mehrzahl von ungeraden Scheitelpunkten umfasst;

Kombinieren des einen oder der mehreren perfekt passenden Teilgraphen zu dem ersten minimalen Spannbaum, um eine erste Eulersche Schaltung zu berechnen; und

Entfernen eines oder mehrerer Duplikat-Scheitelpunkte in der ersten Eulerschen Schaltung, um eine erste Hamiltonsche Schaltung zu erzeugen, wobei die erste Hamiltonsche Schaltung den optimalen Zwischenpfad darstellt, der die Mehrzahl von Teilplots von dem Quellort abdeckt.

3. Verfahren (300) nach Anspruch 1, wobei die vordefinierten Cluster-Kriterien umfassen:

(i) eine Gesamtzeit, die erforderlich ist, um den einen oder die mehreren Zwischen-Cluster zu vervollständigen, ist geringer als die Gesamtzeit, um die eine oder die mehreren landwirtschaftlichen Aktivitäten in der Mehrzahl von Teilplots zu vervollständigen;

(ii) eine Tagesarbeitszeit jedes landwirtschaftlichen Arbeiters, um den einen oder die mehreren Zwischen-Cluster zu vervollständigen, ist geringer als die maximale Tagesarbeitszeit jedes landwirtschaftlichen Arbeiters; und

(iii) eine Gesamtdistanz, um jeden Zwischen-Cluster durch jeden landwirtschaftlichen Arbeiter von dem Quellort zu vervollständigen, ist minimal.

4. Verfahren (300) nach Anspruch 3, wobei die Gesamtzeit, die erforderlich ist, um den einen oder die mehreren Zwischen-Cluster zu vervollständigen, unter Verwendung der vordefinierten Vervollständigungszeit zum Vervollständigen der einen oder der mehreren landwirtschaftlichen Aktivitäten für einen Einheitsbereich durch jeden landwirtschaftlichen Arbeiter und der vordefinierten Durchlaufzeit zum Durchlaufen des Einheitsbereichs durch jeden landwirtschaftlichen Arbeiter berechnet wird.

5. Verfahren (300) nach Anspruch 1, wobei der optimale Abdeckungsplan einen Tageszeitplan jedes landwirtschaftlichen Arbeiters umfasst, der dem einen oder den mehreren einheitlichen Clustern zugeordnet ist, um den landwirtschaftlichen Aktivitätstyp durchzuführen, der für jeden Teilplot erforderlich ist, der in dem einheitlichen Cluster vorhanden ist.

6. Verfahren (300) nach Anspruch 1, wobei das Bestimmen des endgültigen optimalen Pfads für jeden einheitlichen Cluster unter Verwendung des optimalen Routing-Algorithmus Folgendes umfasst:

Bestimmen eines zweiten minimalen Spannbaums, der den einen oder die mehreren Teilplots abdeckt, die in jedem einheitlichen Cluster und dem Quellort vorhanden sind, basierend auf dem euklidischen Abstand jedes Teilplots zu jedem anderen Teilplot, der in dem einheitlichen Cluster vorhanden ist, und dem euklidischen Abstand jedes Teilplots zu dem Quellort, wobei jeder Scheitelpunkt eines oder mehrerer Scheitelpunkte in dem zweiten minimalen Spannbaum entweder einen Quellort oder einen Teilplot darstellt, der in dem einheitlichen Cluster vorhanden ist, und jede Kante einer oder mehrerer Kanten in dem zweiten minimalen Spannbaum eine Verbindung zwischen entweder (i) dem Quellort und dem Teilplot oder (ii) zwei Teilplots darstellt;

Berechnen eines oder mehrerer ungerader Scheitelpunkte aus dem einen oder den mehreren Scheitelpunkten, die in dem zweiten minimalen Spannbaum vorhanden sind, basierend auf einem Grad jedes Scheitelpunkts;

Erzeugen eines oder mehrerer perfekt passender Teilgraphen aus dem einen oder den mehreren ungeraden Scheitelpunkten, wobei jeder perfekt passende Teilgraph mindestens zwei ungerade Scheitelpunkte aus dem einen oder den mehreren ungeraden Scheitelpunkten umfasst, wenn eine Anzahl des einen oder der mehreren ungeraden Scheitelpunkte mehr als zwei beträgt;

Kombinieren des einen oder der mehreren perfekt passenden Teilgraphen zu dem zweiten minimalen Spannbaum, um eine zweite Eulersche Schaltung zu berechnen; und

Entfernen eines oder mehrerer Duplikat-Scheitelpunkte in der zweiten Eulerschen Schaltung, um eine zweite Hamiltonsche Schaltung zu erzeugen, wobei die zweite Hamiltonsche Schaltung den endgültigen optimalen Pfad darstellt, der dem einheitlichen Cluster entspricht.

7. System (100) zum Erzeugen eines optimalen Abdeckungsplans zum Durchführen einer oder mehrerer landwirtschaftlicher Aktivitäten, wobei das System (100) Folgendes umfasst:

einen Speicher (102), der Anweisungen speichert;

eine oder mehrere Eingabe/Ausgabe(E/A)-Schnittstellen (106); und

einen oder mehrere Hardwareprozessoren (104), die mit dem Speicher (102) über die eine oder die mehreren E/A-Schnittstellen (106) gekoppelt sind, wobei der eine oder die mehreren Hardwareprozessoren (104) durch die Anweisungen konfiguriert sind zum:

Empfangen eines oder mehrerer Eingabeparameter zum Erzeugen des optimalen Abdeckungsplans, wobei der eine oder die mehreren Eingabeparameter Folgendes umfassen: eine Mehrzahl von Teilplots, die in einem Plot vorhanden sind, wo die eine oder die mehreren landwirtschaftlichen Aktivitäten durchgeführt werden sollen, Informationen, die sich auf einen oder mehrere landwirtschaftliche Arbeiter in dem Plot beziehen, wobei die Informationen menschliche Ressourcen sind, die verfügbar sind, um die eine oder die mehreren landwirtschaftlichen Aktivitäten in jedem Teilplot der Mehrzahl von Teilplots durchzuführen, einen Satz von Teilplot-Koordinatenpunkten für jeden Teilplot der Mehrzahl von Teilplots, einen Satz von Koordinaten eines Quellorts, wobei der Quellort einen Punkt darstellt, von dem aus jeder landwirtschaftliche Arbeiter des einen oder der mehreren landwirtschaftlichen Arbeiter beginnt, jeden Teilplot zu erreichen, um die eine oder die mehreren landwirtschaftlichen Aktivitäten durchzuführen, eine maximale Tagesarbeitszeit jedes landwirtschaftlichen Arbeiters, eine Gesamtzeit zum Abschließen der einen oder der mehreren landwirtschaftlichen Aktivitäten in der Mehrzahl von Teilplots, eine vordefinierte Abschlusszeit zum Abschließen der einen oder der mehreren landwirtschaftlichen Aktivitäten für einen Einheitsbereich durch jeden landwirtschaftlichen Arbeiter, eine vordefinierte Durchlaufzeit zum Durchlaufen des Einheitsbereichs durch jeden landwirtschaftlichen Arbeiter und einen landwirtschaftlichen Aktivitätstyp, der für jeden Teilplot erforderlich ist;

Berechnen (i) eines Teilplot-Bereichs jedes Teilplots der Mehrzahl von Teilplots und (ii) eines Schwerpunkts jedes Teilplots der Mehrzahl von Teilplots unter Verwendung des Satzes von Teilplot-Koordinatenpunkten, die jedem Teilplot zugeordnet sind;

Berechnen (i) eines euklidischen Abstands jedes Teilplots zu jedem anderen Teilplot der Mehrzahl von Teilplots basierend auf dem Schwerpunkt, der jedem Teilplot zugeordnet ist, und (ii) des euklidischen Abstands jedes Teilplots zu dem Quellort basierend auf dem Schwerpunkt, der jedem Teilplot zugeordnet ist, und dem Satz von Koordinaten des Quellorts;

Bestimmen eines optimalen Zwischenpfads, der die Mehrzahl von Teilplots von dem Quellort abdeckt, unter Verwendung eines optimalen Routing-Algorithmus basierend auf dem euklidischen Abstand jedes Teilplots zu jedem anderen Teilplot der Mehrzahl von Teilplots und dem euklidischen Abstand jedes Teilplots zu dem Quellort;

Bilden eines oder mehrerer Zwischen-Cluster aus der Mehrzahl von Teilplots unter Verwendung des optimalen Zwischenpfads basierend auf dem Erfüllen eines vordefinierten Cluster-Kriteriums, wobei jedes Zwischen-Cluster des einen oder der mehreren Zwischen-Cluster einen oder mehrere Teilplots aus der Mehrzahl von Teilplots umfasst;

Bestimmen eines oder mehrerer einheitlicher Cluster durch Anwenden eines einheitlichen Verteilungsalgorithmus UDA auf den einen oder die mehreren Zwischen-Cluster, wobei

jedes einheitliche Cluster einen oder mehrere Teilplots aus der Mehrzahl von Teilplots umfasst, Bestimmen des einen oder der mehreren einheitlichen Cluster, wobei die Bestimmung Folgendes umfasst:

(a) Berechnen eines Gesamtplotbereichs jedes Zwischen-Clusters durch Addieren des Teilplotbereichs jedes Teilplots, der in dem Zwischen-Cluster vorhanden ist;
(b) Berechnen eines Standardabweichungs-Gesamtplotbereichs unter Verwendung des Gesamtplotbereichs jedes Zwischen-Clusters des einen oder der mehreren Zwischen-Cluster;
(c) Identifizieren (i) des Zwischen-Clusters mit einem größten Gesamtplotbereich und (ii) des Zwischen-Clusters mit einem kleinsten Gesamtplotbereich unter dem einen oder den mehreren Zwischen-Clustern basierend auf dem Gesamtplotbereich jedes Zwischen-Clusters;
(d) Identifizieren (i) des Teilplots mit dem größten Teilplotbereich innerhalb des Zwischen-Clusters mit dem größten Gesamtplotbereich und (ii) des Teilplots mit dem kleinsten Teilplotbereich innerhalb des Zwischen-Clusters mit dem kleinsten Gesamtplotbereich;
(e) Austauschen des Teilplots mit dem größten Teilplotbereich innerhalb des Zwischen-Clusters mit dem größten Gesamtplotbereich mit dem Teilplot mit dem kleinsten Teilplotbereich innerhalb des Zwischen-Clusters mit dem kleinsten Gesamtplotbereich, um ein oder mehrere aufeinanderfolgende Zwischen-Cluster zu erhalten;
(f) Berechnen des Gesamtplotbereichs jedes aufeinanderfolgenden Zwischen-Clusters durch Addieren des Teilplotbereichs jedes Teilplots, der in dem aufeinanderfolgenden Zwischen-Cluster vorhanden ist;
(g) Berechnen eines aufeinanderfolgenden Standardabweichungs-Gesamtplotbereichs unter Verwendung des Gesamtplotbereichs jedes aufeinanderfolgenden Zwischen-Clusters des einen oder der mehreren aufeinanderfolgenden Zwischen-Cluster; und

(h) Wiederholen der Schritte (c) bis (g) durch Nehmen des einen oder der mehreren aufeinanderfolgenden Zwischen-Cluster als das eine oder die mehreren Zwischen-Cluster, bis der aufeinanderfolgende Standardabweichungs-Gesamtplotbereich einem vordefinierten Schwellenwert am nächsten ist, um das eine oder die mehreren einheitlichen Cluster zu bestimmen;

Bestimmen eines endgültigen optimalen Pfads für jedes einheitliche Cluster unter Verwendung des optimalen Routing-Algorithmus basierend auf dem euklidischen Abstand jedes Teilplots zu jedem anderen Teilplot des einen oder der mehreren Teilplots, die in dem einheitlichen Cluster vorhanden sind, und dem euklidischen Abstand jedes Teilplots, der in dem einheitlichen Cluster vorhanden ist, zu dem Quellort, wobei der endgültige optimale Pfad für jedes einheitliche Cluster bestimmt wird, um den einen oder die mehreren Teilplots, die in dem einheitlichen Cluster vorhanden sind, von dem Quellort abzudecken; und
Erzeugen des optimalen Abdeckungsplans für die Mehrzahl von Teilplots basierend auf einer Anzahl des einen oder der mehreren landwirtschaftlichen Arbeiter, dem landwirtschaftlichen Aktivitätstyp, der für jeden Teilplot erforderlich ist, unter Verwendung des einen oder der mehreren einheitlichen Cluster und des endgültigen optimalen Pfads, der für jedes einheitliche Cluster bestimmt wird.

8. System (100) nach Anspruch 7, wobei der eine oder die mehreren Hardwareprozessoren (104) konfiguriert sind zum Bestimmen des optimalen Zwischenpfads, der die Mehrzahl von Teilplots von dem Quellort abdeckt, unter Verwendung des optimalen Routing-Algorithmus basierend auf dem euklidischen Abstand jedes Teilplots zu jedem anderen Teilplot der Mehrzahl von Teilplots und dem euklidischen Abstand jedes Teilplots zu dem Quellort durch:

Bestimmen eines ersten minimalen Spannbaums, der die Mehrzahl von Teilplots und den Quellort abdeckt, basierend auf dem euklidischen Abstand jedes Teilplots zu jedem anderen Teilplot der Mehrzahl von Teilplots und dem euklidischen Abstand jedes Teilplots zu dem Quellort, wobei jeder Scheitelpunkt einer Mehrzahl von Scheitelpunkten in dem ersten minimalen Spannbaum entweder den Quellort oder den Teilplot der Mehrzahl von Teilplots darstellt und jede Kante einer Mehrzahl von Kanten in dem ersten minimalen Spannbaum eine Verbindung zwischen entweder (i) dem Quellort und dem Teilplot oder (ii) zwei Teilplots darstellt;
Berechnen einer Mehrzahl von ungeraden Scheitelpunkten aus der Mehrzahl von Scheitelpunkten, die in dem ersten minimalen Spannbaum vorhanden sind, basierend auf einem Grad jedes Scheitelpunkts;
Erzeugen eines oder mehrerer perfekt passender Teilgraphen aus der Mehrzahl von ungeraden Scheitelpunkten, wobei jeder perfekt passende Teilgraph mindestens zwei ungerade Scheitelpunkte aus der Mehrzahl von ungeraden Scheitelpunkten umfasst;
Kombinieren des einen oder der mehreren perfekt passenden Teilgraphen zu dem ersten minimalen Spannbaum, um eine erste Eulersche Schaltung zu berechnen; und
Entfernen eines oder mehrerer Duplikat-Scheitelpunkte in der ersten Eulerschen Schaltung, um eine erste Hamiltonsche Schaltung zu erzeugen, wobei die erste Hamiltonsche Schaltung den optimalen Zwischenpfad darstellt, der die Mehrzahl von Teilplots von dem Quellort abdeckt.

9. System (100) nach Anspruch 7, wobei die vordefinierten Cluster-Kriterien umfassen:

(i) eine Gesamtzeit, die erforderlich ist, um den einen oder die mehreren Zwischen-Cluster zu vervollständigen, ist geringer als die Gesamtzeit, um die eine oder die mehreren landwirtschaftlichen Aktivitäten in der Mehrzahl von Teilplots zu vervollständigen;
(ii) eine Tagesarbeitszeit jedes landwirtschaftlichen Arbeiters, um den einen oder die mehreren Zwischen-Cluster zu vervollständigen, ist geringer als die maximale Tagesarbeitszeit jedes landwirtschaftlichen Arbeiters; und
(iii) eine Gesamtdistanz, um jeden Zwischen-Cluster durch jeden landwirtschaftlichen Arbeiter von dem Quellort zu vervollständigen, ist minimal.

10. System (100) nach Anspruch 9, wobei die Gesamtzeit, die erforderlich ist, um den einen oder die mehreren Zwischen-Cluster zu vervollständigen, unter Verwendung der vordefinierten Vervollständigungszeit zum Vervollständigen der einen oder der mehreren landwirtschaftlichen Aktivitäten für einen Einheitsbereich durch jeden landwirtschaftlichen Arbeiter und der vordefinierten Durchlaufzeit zum Durchlaufen des Einheitsbereichs durch jeden landwirtschaftlichen Arbeiter berechnet wird.

11. System (100) nach Anspruch 7, wobei der optimale Abdeckungsplan einen Tageszeitplan jedes landwirtschaftlichen Arbeiters umfasst, der dem einen oder den mehreren einheitlichen Clustern zugeordnet ist, um den landwirtschaftlichen Aktivitätstyp durchzuführen, der für jeden Teilplot erforderlich ist, der in dem einheitlichen Cluster vorhanden ist.

**12.** System (100) nach Anspruch 7, wobei der eine oder die mehreren Hardwareprozessoren (104) konfiguriert sind zum Bestimmen des endgültigen optimalen Pfads für jeden einheitlichen Cluster unter Verwendung des optimalen Routing-Algorithmus durch:

Bestimmen eines zweiten minimalen Spannbaums, der den einen oder die mehreren Teilplots abdeckt, die in jedem einheitlichen Cluster und dem Quellort vorhanden sind, basierend auf dem euklidischen Abstand jedes Teilplots zu jedem anderen Teilplot, der in dem einheitlichen Cluster vorhanden ist, und dem euklidischen Abstand jedes Teilplots zu dem Quellort, wobei jeder Scheitelpunkt eines oder mehrerer Scheitelpunkte in dem zweiten minimalen Spannbaum entweder einen Quellort oder einen Teilplot darstellt, der in dem einheitlichen Cluster vorhanden ist, und jede Kante einer oder mehrerer Kanten in dem zweiten minimalen Spannbaum eine Verbindung zwischen entweder (i) dem Quellort und dem Teilplot oder (ii) zwei Teilplots darstellt;
Berechnen eines oder mehrerer ungerader Scheitelpunkte aus dem einen oder den mehreren Scheitelpunkten, die in dem zweiten minimalen Spannbaum vorhanden sind, basierend auf einem Grad jedes Scheitelpunkts;
Erzeugen eines oder mehrerer perfekt passender Teilgraphen aus dem einen oder den mehreren ungeraden Scheitelpunkten, wobei jeder perfekt passende Teilgraph mindestens zwei ungerade Scheitelpunkte aus dem einen oder den mehreren ungeraden Scheitelpunkten umfasst, wenn eine Anzahl des einen oder der mehreren ungeraden Scheitelpunkte mehr als zwei beträgt;
Kombinieren des einen oder der mehreren perfekt passenden Teilgraphen zu dem zweiten minimalen Spannbaum, um eine zweite Eulersche Schaltung zu berechnen; und
Entfernen eines oder mehrerer Duplikat-Scheitelpunkte in der zweiten Eulerschen Schaltung, um eine zweite Hamiltonsche Schaltung zu erzeugen, wobei die zweite Hamiltonsche Schaltung den endgültigen optimalen Pfad darstellt, der dem einheitlichen Cluster entspricht.

**13.** Ein oder mehrere nichtflüchtige maschinenlesbare Informationsspeichermedien, die eine oder mehrere Anweisungen umfassen, die, wenn sie von einem oder mehreren Hardwareprozessoren ausgeführt werden, Folgendes bewirken:

Empfangen eines oder mehrerer Eingabeparameter zum Erzeugen des optimalen Abdeckungsplans, wobei der eine oder die mehreren Eingabeparameter Folgendes umfassen: eine Mehrzahl von Teilplots, die in einem Plot vorhanden sind, wo die eine oder die mehreren landwirtschaftlichen Aktivitäten durchzuführen sind, Informationen, die sich auf einen oder mehrere landwirtschaftliche Arbeiter in dem Plot beziehen, wobei die Informationen sich auf menschliche Ressourcen beziehen, die verfügbar sind, um die eine oder die mehreren landwirtschaftlichen Aktivitäten in jedem Teilplot der Mehrzahl von Teilplots durchzuführen, einen Satz von Teilplot-Koordinatenpunkten für jeden Teilplot der Mehrzahl von Teilplots, einen Satz von Koordinaten eines Quellorts, wobei der Quellort einen Punkt darstellt, von dem aus jeder landwirtschaftliche Arbeiter des einen oder der mehreren landwirtschaftlichen Arbeiter beginnt, jeden Teilplot zu erreichen, um die eine oder die mehreren landwirtschaftlichen Aktivitäten durchzuführen, eine maximale Tagesarbeitszeit jedes landwirtschaftlichen Arbeiters, eine Gesamtzeit zum Abschließen der einen oder der mehreren landwirtschaftlichen Aktivitäten in der Mehrzahl von Teilplots, eine vordefinierte Abschlusszeit zum Abschließen der einen oder der mehreren landwirtschaftlichen Aktivitäten für einen Einheitsbereich durch jeden landwirtschaftlichen Arbeiter, eine vordefinierte Durchlaufzeit zum Durchlaufen des Einheitsbereichs durch jeden landwirtschaftlichen Arbeiter und einen oder mehrere landwirtschaftliche Aktivitätstypen, die für jeden Teilplot erforderlich sind;
Berechnen (i) eines Teilplot-Bereichs jedes Teilplots der Mehrzahl von Teilplots und (ii) eines Schwerpunkts jedes Teilplots der Mehrzahl von Teilplots unter Verwendung des Satzes von Teilplot-Koordinatenpunkten, die jedem Teilplot zugeordnet sind;
Berechnen (i) eines euklidischen Abstands jedes Teilplots zu jedem anderen Teilplot der Mehrzahl von Teilplots basierend auf dem Schwerpunkt, der jedem Teilplot zugeordnet ist, und (ii) des euklidischen Abstands jedes Teilplots zu dem Quellort basierend auf dem Schwerpunkt, der jedem Teilplot zugeordnet ist, und dem Satz von Koordinaten des Quellorts;
Bestimmen eines optimalen Zwischenpfads, der die Mehrzahl von Teilplots von dem Quellort abdeckt, unter Verwendung eines optimalen Routing-Algorithmus basierend auf dem euklidischen Abstand jedes Teilplots zu jedem anderen Teilplot der Mehrzahl von Teilplots und dem euklidischen Abstand jedes Teilplots zu dem Quellort;
Bilden eines oder mehrerer Zwischen-Cluster aus der Mehrzahl von Teilplots unter Verwendung des optimalen Zwischenpfads basierend auf dem Erfüllen eines vordefinierten Cluster-Kriteriums, wobei jedes Zwischen-Cluster des einen oder der mehreren Zwischen-Cluster einen oder mehrere Teilplots aus der Mehrzahl von Teilplots umfasst;
Bestimmen eines oder mehrerer einheitlicher Cluster durch Anwenden eines einheitlichen Verteilungsalgorithmus UDA auf den einen oder die mehreren Zwischen-Cluster, wobei

jedes einheitliche Cluster einen oder mehrere Teilplots aus der Mehrzahl von Teilplots umfasst,
Bestimmen des einen oder der mehreren einheitlichen Cluster, umfassend:

(a) Berechnen eines Gesamtplotbereichs jedes Zwischen-Clusters durch Addieren des Teilplotbereichs jedes Teilplots, der in dem Zwischen-Cluster vorhanden ist;
(b) Berechnen eines Standardabweichungs-Gesamtplotbereichs unter Verwendung des Gesamtplotbereichs jedes Zwischen-Clusters des einen oder der mehreren Zwischen-Cluster;
(c) Identifizieren (i) des Zwischen-Clusters mit einem größten Gesamtplotbereich und (ii) des Zwischen-Clusters mit einem kleinsten Gesamtplotbereich unter dem einen oder den mehreren Zwischen-Clustern basierend auf dem Gesamtplotbereich jedes Zwischen-Clusters;
(d) Identifizieren (i) des Teilplots mit dem größten Teilplotbereich innerhalb des Zwischen-Clusters mit dem größten Gesamtplotbereich und (ii) des Teilplots mit dem kleinsten Teilplotbereich innerhalb des Zwischen-Clusters mit dem kleinsten Gesamtplotbereich;
(e) Austauschen des Teilplots mit dem größten Teilplotbereich innerhalb des Zwischen-Clusters mit dem größten Gesamtplotbereich mit dem Teilplot mit dem kleinsten Teilplotbereich innerhalb des Zwischen-Clusters mit dem kleinsten Gesamtplotbereich, um ein oder mehrere aufeinanderfolgende Zwischen-Cluster zu erhalten;
(f) Berechnen des Gesamtplotbereichs jedes aufeinanderfolgenden Zwischen-Clusters durch Addieren des Teilplotbereichs jedes Teilplots, der in dem aufeinanderfolgenden Zwischen-Cluster vorhanden ist;
(g) Berechnen eines aufeinanderfolgenden Standardabweichungs-Gesamtplotbereichs unter Verwendung des Gesamtplotbereichs jedes aufeinanderfolgenden Zwischen-Clusters des einen oder der mehreren aufeinanderfolgenden Zwischen-Cluster; und
(h) Wiederholen der Schritte (c) bis (g) durch Nehmen des einen oder der mehreren aufeinanderfolgenden Zwischen-Cluster als das eine oder die mehreren Zwischen-Cluster, bis der aufeinanderfolgende Standardabweichungs-Gesamtplotbereich einem vordefinierten Schwellenwert am nächsten ist, um das eine oder die mehreren einheitlichen Cluster zu bestimmen;

Bestimmen eines endgültigen optimalen Pfads für jedes einheitliche Cluster unter Verwendung des optimalen Routing-Algorithmus basierend auf dem euklidischen Abstand jedes Teilplots zu jedem anderen Teilplot des einen oder der mehreren Teilplots, die in dem einheitlichen Cluster vorhanden sind, und dem euklidischen Abstand jedes Teilplots, der in dem einheitlichen Cluster vorhanden ist, zu dem Quellort, wobei der endgültige optimale Pfad für jedes einheitliche Cluster bestimmt wird, um den einen oder die mehreren Teilplots, die in dem einheitlichen Cluster vorhanden sind, von dem Quellort abzudecken; und
Erzeugen des optimalen Abdeckungsplans für die Mehrzahl von Teilplots basierend auf einer Anzahl des einen oder der mehreren landwirtschaftlichen Arbeiter, dem landwirtschaftlichen Aktivitätstyp, der für jeden Teilplot erforderlich ist, unter Verwendung des einen oder der mehreren einheitlichen Cluster und des endgültigen optimalen Pfads, der für jedes einheitliche Cluster bestimmt wird.

## Revendications

1. Procédé mis en oeuvre par processeur (300) pour générer un plan de couverture optimal pour réaliser une ou plusieurs activités agricoles, le procédé comprenant :

la réception (302), via un ou plusieurs processeurs matériels (104), d'un ou plusieurs paramètres d'entrée pour générer le plan de couverture optimal, les un ou plusieurs paramètres d'entrée comprenant : une pluralité de sous-parcelles présentes dans une parcelle où les une ou plusieurs activités agricoles doivent être réalisées, des informations relatives à un ou plusieurs travailleurs agricoles dans la parcelle, les informations étant liées aux ressources humaines disponibles pour réaliser les une ou plusieurs activités agricoles dans chaque sous-parcelle de la pluralité de sous-parcelles, un ensemble de points de coordonnées de sous-parcelle pour chaque sous-parcelle de la pluralité de sous-parcelles, un ensemble de coordonnées d'un emplacement source, l'emplacement source représentant un point à partir duquel chaque travailleur agricole parmi les un ou plusieurs travailleurs agricoles commence à atteindre chaque sous-parcelle pour réaliser les une ou plusieurs activités agricoles, un nombre maximal d'heures en jour-personne de chaque travailleur agricole, un temps total pour réaliser les une ou plusieurs activités agricoles dans la pluralité de sous-parcelles, un temps d'achèvement prédéfini pour terminer les une ou plusieurs activités agricoles pour une unité de surface par chaque travailleur agricole, un temps de traversée prédéfini pour traverser l'unité de surface par chaque travailleur agricole, et un ou plusieurs types d'activités agricoles requis pour chaque sous-parcelle ;

le calcul (304), via les un ou plusieurs processeurs matériels (104), (i) d'une surface de sous-parcelle de chaque sous-parcelle de la pluralité de sous-parcelles, et (ii) d'un centroïde de chaque sous-parcelle de la pluralité de sous-parcelles, au moyen de l'ensemble de points de coordonnées de sous-parcelle associé à chaque sous-parcelle ;

le calcul (306), via les un ou plusieurs processeurs matériels (104), (i) d'une distance euclidienne de chaque sous-parcelle à chaque autre sous-parcelle de la pluralité de sous-parcelles, sur la base du centroïde associé à chaque sous-parcelle, et (ii) de la distance euclidienne de chaque sous-parcelle à l'emplacement source, sur la base du centroïde associé à chaque sous-parcelle et de l'ensemble de coordonnées de l'emplacement source ;

la détermination (308), via les un ou plusieurs processeurs matériels (104), d'un trajet optimal intermédiaire couvrant la pluralité de sous-parcelles à partir de l'emplacement source, au moyen d'un algorithme d'acheminement optimal, sur la base de la distance euclidienne de chaque sous-parcelle à chaque autre sous-parcelle de la pluralité de sous-parcelles et de la distance euclidienne de chaque sous-parcelle à l'emplacement source ;

la formation (310), via les un ou plusieurs processeurs matériels (104), d'un ou plusieurs groupes intermédiaires parmi la pluralité de sous-parcelles, au moyen du trajet optimal intermédiaire, sur la base de la satisfaction d'un critère de groupe prédéfini, chaque groupe intermédiaire des un ou plusieurs groupes intermédiaires comprenant une ou plusieurs sous-parcelles parmi la pluralité de sous-parcelles ;

la détermination (312), via les un ou plusieurs processeurs matériels (104), d'un ou plusieurs groupes uniformes par application d'un algorithme de distribution uniforme UDA aux un ou plusieurs groupes intermédiaires, dans lequel

chaque groupe uniforme comprend une ou plusieurs sous-parcelles parmi la pluralité de sous-parcelles, et

la détermination des un ou plusieurs groupes uniformes, comprenant :

(a) le calcul d'une surface de parcelle totale de chaque groupe intermédiaire, par sommation de la surface de sous-parcelle de chaque sous-parcelle présente dans le groupe intermédiaire ;

(b) le calcul d'un écart type de surface de parcelle totale, au moyen de la surface de parcelle totale de chaque groupe intermédiaire parmi les un ou plusieurs groupes intermédiaires ;

(c) l'identification (i) du groupe intermédiaire ayant la plus grande surface de parcelle totale, et (ii) du groupe intermédiaire ayant la plus petite surface de parcelle totale, parmi les un ou plusieurs groupes intermédiaires, sur la base de la surface de parcelle totale de chaque groupe intermédiaire ;

(d) l'identification (i) de la sous-parcelle ayant la plus grande surface de sous-parcelle dans le groupe intermédiaire ayant la plus grande surface de parcelle totale, et (ii) de la sous-parcelle ayant la plus petite surface de sous-parcelle dans le groupe intermédiaire ayant la plus petite surface de parcelle totale ;

(e) la permutation de la sous-parcelle ayant la plus grande surface de sous-parcelle dans le groupe intermédiaire ayant la plus grande surface de parcelle totale, avec la sous-parcelle ayant la plus petite surface de sous-parcelle dans le groupe intermédiaire ayant la plus petite surface de parcelle totale, pour obtenir un ou plusieurs groupes intermédiaires successifs ;

(f) le calcul de la surface de parcelle totale de chaque groupe intermédiaire successif, par sommation de la surface de sous-parcelle de chaque sous-parcelle présente dans le groupe intermédiaire successif ;

(g) le calcul d' successif un écart type de surface de parcelle totale successive, au moyen de la surface de parcelle totale de chaque groupe intermédiaire successif parmi les un ou plusieurs groupes intermédiaires successifs ; et

(h) la répétition des étapes (c) à (g), en prenant les un ou plusieurs groupes intermédiaires successifs comme les un ou plusieurs groupes intermédiaires, jusqu'à ce que l'écart type de surface totale de parcelle successif soit le plus proche d'un seuil prédéfini, pour déterminer les un ou plusieurs groupes uniformes ;

la détermination (314), via les un ou plusieurs processeurs matériels (104), d'un trajet optimal final pour chaque groupe uniforme, au moyen de l'algorithme d'acheminement optimal, sur la base de la distance euclidienne de chaque sous-parcelle à chaque autre sous-parcelle des une ou plusieurs sous-parcelles présentes dans le groupe uniforme et la distance euclidienne de chaque sous-parcelle présente dans le groupe uniforme à l'emplacement source, le trajet optimal final pour chaque groupe uniforme étant déterminé de façon à couvrir les une ou plusieurs sous-parcelles présentes dans le groupe uniforme à partir de l'emplacement source ; et

la génération (316), via les un ou plusieurs processeurs matériels (104), du plan de couverture optimal pour la pluralité de sous-parcelles, sur la base d'un nombre des un ou plusieurs travailleurs agricoles, le type d'activité agricole requis pour chaque sous-parcelle, au moyen des un ou plusieurs groupes uniformes et du trajet optimal final déterminé pour chaque groupe uniforme.

**2.** Procédé (300) selon la revendication 1, dans lequel la détermination du trajet optimal intermédiaire couvrant la pluralité de sous-parcelles à partir de l'emplacement source, au moyen d'un algorithme d'acheminement optimal, sur la base de la distance euclidienne de chaque sous-parcelle à chaque autre sous-parcelle de la pluralité de sous-parcelles et de la distance euclidienne de chaque sous-parcelle à l'emplacement source, comprend :

la détermination d'un premier arbre couvrant de poids minimal couvrant la pluralité de sous-parcelles et l'emplacement source, sur la base de la distance euclidienne de chaque sous-parcelle à chaque autre sous-parcelle de la pluralité de sous-parcelles et de la distance euclidienne de chaque sous-parcelle à l'emplacement source, chaque sommet d'une pluralité de sommets dans le premier arbre couvrant de poids minimal représentant soit l'emplacement source, soit la sous-parcelle de la pluralité de sous-parcelles, et chaque bord d'une pluralité de bords dans le premier arbre couvrant de poids minimal représentant une liaison entre soit (i) l'emplacement source et la sous-parcelle, soit (ii) deux sous-parcelles ;
le calcul d'une pluralité de sommets impairs parmi la pluralité de sommets présents dans le premier arbre couvrant de poids minimal, sur la base d'un degré de chaque sommet ;
la création d'un ou plusieurs sous-graphes de correspondance parfaite, à partir de la pluralité de sommets impairs, chaque sous-graphe de correspondance parfaite comprenant au moins deux sommets impairs parmi la pluralité de sommets impairs ;
la combinaison des un ou plusieurs sous-graphes de correspondance parfaite avec le premier arbre couvrant de poids minimal, pour calculer un premier circuit eulérien ; et
la suppression d'un ou plusieurs sommets en double dans le premier circuit eulérien pour créer un premier circuit hamiltonien, le premier circuit hamiltonien représentant le trajet optimal intermédiaire couvrant la pluralité de sous-parcelles à partir de l'emplacement source.

**3.** Procédé (300) selon la revendication 1, dans lequel les critères de groupe prédéfinis comprennent :

(i) un temps total requis pour compléter les un ou plusieurs groupes intermédiaires est inférieur au temps total pour réaliser les une ou plusieurs activités agricoles dans la pluralité de sous-parcelles ;
(ii) un nombre total d'heures en jour-personne de chaque travailleur agricole pour compléter un ou plusieurs groupes intermédiaires est inférieur au nombre maximal d'heures en jour-personne de chaque travailleur agricole ; et
(iii) la distance totale pour compléter chaque groupe intermédiaire par chaque travailleur agricole, à partir de l'emplacement source, est minimale.

**4.** Procédé (300) selon la revendication 3, dans lequel le temps total requis pour compléter les un ou plusieurs groupes intermédiaires est calculé au moyen du temps d'achèvement prédéfini pour terminer les une ou plusieurs activités agricoles pour une unité de surface par chaque travailleur agricole et du temps de traversée prédéfini pour traverser l'unité de surface par chaque travailleur agricole.

**5.** Procédé (300) selon la revendication 1, dans lequel le plan de couverture optimal comprend un programme journalier de chaque travailleur agricole affecté aux un ou plusieurs groupes uniformes pour effectuer le type d'activité agricole requis pour chaque sous-parcelle présente dans la groupe uniforme.

**6.** Procédé (300) selon la revendication 1, dans lequel la détermination du trajet optimal final pour chaque groupe uniforme, au moyen de l'algorithme d'acheminement optimal, comprend :

la détermination d'un deuxième arbre couvrant de poids minimal couvrant les une ou plusieurs sous-parcelles présentes dans chaque groupe uniforme et l'emplacement source, sur la base de la distance euclidienne de chaque sous-parcelle à chaque autre sous-parcelle présente dans le groupe uniforme et de la distance euclidienne de chaque sous-parcelle à l'emplacement source, chaque sommet d'un ou plusieurs sommets dans le deuxième arbre couvrant de poids minimal représentant soit un emplacement source, soit une sous-parcelle présente dans le groupe uniforme, et chaque bord d'un ou plusieurs bords dans le deuxième arbre couvrant de poids minimal représentant une liaison entre soit (i) l'emplacement source et la sous-parcelle, soit (ii) deux sous-parcelles ;
le calcul d'un ou plusieurs sommets impairs parmi les un ou plusieurs sommets présents dans le deuxième arbre couvrant de poids minimal, sur la base d'un degré de chaque sommet ;
la création d'un ou plusieurs sous-graphes de correspondance parfaite, à partir des un ou plusieurs sommets impairs, chaque sous-graphe de correspondance parfaite comprenant au moins deux sommets impairs parmi les un ou plusieurs sommets impairs, si un nombre des un ou plusieurs sommets impairs est supérieur à deux ;

la combinaison des un ou plusieurs sous-graphes de correspondance parfaite avec le deuxième arbre couvrant de poids minimal, pour calculer un premier circuit eulérien ; et

la suppression d'un ou plusieurs sommets en double dans le deuxième circuit eulérien pour créer un deuxième circuit hamiltonien, le premier circuit hamiltonien représentant le trajet optimal final correspondant au groupe uniforme.

7. Système (100) pour générer un plan de couverture optimal pour réaliser une ou plusieurs activités agricoles, le système (100) comprenant :

une mémoire (102) stockant des instructions ;
une ou plusieurs interfaces d'entrée/sortie (E/S) (106) ; et
un ou plusieurs processeurs matériels (104) couplés à la mémoire (102) via les une ou plusieurs interfaces E/S (106), dans lequel les un ou plusieurs processeurs matériels (104) sont configurés par les instructions pour :

recevoir un ou plusieurs paramètres d'entrée pour générer le plan de couverture optimale, les un ou plusieurs paramètres d'entrée comprenant : une pluralité de sous-parcelles présentes dans une parcelle où les une ou plusieurs activités agricoles doivent être réalisées, des informations relatives à un ou plusieurs travailleurs agricoles dans la parcelle, les informations étant les ressources humaines disponibles pour réaliser les une ou plusieurs activités agricoles dans chaque sous-parcelle de la pluralité de sous-parcelles, un ensemble de points de coordonnées de sous-parcelle pour chaque sous-parcelle de la pluralité de sous-parcelles, un ensemble de coordonnées d'un emplacement source, l'emplacement source représentant un point à partir duquel chaque travailleur agricole parmi les un ou plusieurs travailleurs agricoles commence à atteindre chaque sous-parcelle pour réaliser les une ou plusieurs activités agricoles, un nombre maximal d'heures en jour-personne de chaque travailleur agricole, un temps total pour réaliser les une ou plusieurs activités agricoles dans la pluralité de sous-parcelles, un temps d'achèvement prédéfini pour terminer les une ou plusieurs activités agricoles pour une unité de surface par chaque travailleur agricole, un temps de traversée prédéfini pour traverser l'unité de surface par chaque travailleur agricole, et une activité agricole requise pour chaque sous-parcelle ;

calculer (i) une surface de sous-parcelle de chaque sous-parcelle de la pluralité de sous-parcelles, et (ii) d'un centroïde de chaque sous-parcelle de la pluralité de sous-parcelles, au moyen de l'ensemble de points de coordonnées de sous-parcelle associé à chaque sous-parcelle ;

calculer (i) une distance euclidienne de chaque sous-parcelle à chaque autre sous-parcelle de la pluralité de sous-parcelles, sur la base du centroïde associé à chaque sous-parcelle, et (ii) de la distance euclidienne de chaque sous-parcelle à l'emplacement source, sur la base du centroïde associé à chaque sous-parcelle et de l'ensemble de coordonnées de l'emplacement source ;

déterminer un trajet optimal intermédiaire couvrant la pluralité de sous-parcelles à partir de l'emplacement source, au moyen d'un algorithme d'acheminement optimal, sur la base de la distance euclidienne de chaque sous-parcelle à chaque autre sous-parcelle de la pluralité de sous-parcelles et de la distance euclidienne de chaque sous-parcelle à l'emplacement source ;

former un ou plusieurs groupes intermédiaires parmi la pluralité de sous-parcelles, au moyen du trajet optimal intermédiaire, sur la base de la satisfaction d'un critère de groupe prédéfini, chaque groupe intermédiaire des un ou plusieurs groupes intermédiaires comprenant une ou plusieurs sous-parcelles parmi la pluralité de sous-parcelles ;

déterminer un ou plusieurs groupes uniformes par application d'un algorithme de distribution uniforme UDA aux un ou plusieurs groupes intermédiaires, dans lequel

chaque groupe uniforme comprend une ou plusieurs sous-parcelles parmi la pluralité de sous-parcelles, et déterminer les un ou plusieurs groupes uniformes, la détermination comprenant :

(a) le calcul d'une surface de parcelle totale de chaque groupe intermédiaire, par sommation de la surface de sous-parcelle de chaque sous-parcelle présente dans le groupe intermédiaire ;

(b) le calcul d'un écart type de surface de parcelle totale, au moyen de la surface de parcelle totale de chaque groupe intermédiaire parmi les un ou plusieurs groupes intermédiaires ;

(c) l'identification (i) du groupe intermédiaire ayant la plus grande surface de parcelle totale, et (ii) du groupe intermédiaire ayant la plus petite surface de parcelle totale, parmi les un ou plusieurs groupes intermédiaires, sur la base de la surface de parcelle totale de chaque groupe intermédiaire ;

(d) l'identification (i) de la sous-parcelle ayant la plus grande surface de sous-parcelle dans le groupe intermédiaire ayant la plus grande surface de parcelle totale, et (ii) de la sous-parcelle ayant la plus petite surface de sous-parcelle dans le groupe intermédiaire ayant la plus petite surface de parcelle totale ;

(e) la permutation de la sous-parcelle ayant la plus grande surface de sous-parcelle dans le groupe intermédiaire ayant la plus grande surface de parcelle totale, avec la sous-parcelle ayant la plus petite surface de sous-parcelle dans le groupe intermédiaire ayant la plus petite surface de parcelle totale, pour obtenir un ou plusieurs groupes intermédiaires successifs ;

(f) le calcul de la surface de parcelle totale de chaque groupe intermédiaire successif, par sommation de la surface de sous-parcelle de chaque sous-parcelle présente dans le groupe intermédiaire successif ;

(g) le calcul d' successif un écart type de surface de parcelle totale successive, au moyen de la surface de parcelle totale de chaque groupe intermédiaire successif parmi les un ou plusieurs groupes intermédiaires successifs ; et

(h) la répétition des étapes (c) à (g), en prenant les un ou plusieurs groupes intermédiaires successifs comme les un ou plusieurs groupes intermédiaires, jusqu'à ce que l'écart type de surface totale de parcelle successif soit le plus proche d'un seuil prédéfini, pour déterminer les un ou plusieurs groupes uniformes ;

déterminer un trajet optimal final pour chaque groupe uniforme, au moyen de l'algorithme d'acheminement optimal, sur la base de la distance euclidienne de chaque sous-parcelle à chaque autre sous-parcelle des une ou plusieurs sous-parcelles présentes dans le groupe uniforme et la distance euclidienne de chaque sous-parcelle présente dans le groupe uniforme à l'emplacement source, le trajet optimal final pour chaque groupe uniforme étant déterminé de façon à couvrir les une ou plusieurs sous-parcelles présentes dans le groupe uniforme à partir de l'emplacement source ; et

générer le plan de couverture optimal pour la pluralité de sous-parcelles, sur la base d'un nombre des un ou plusieurs travailleurs agricoles, le type d'activité agricole requis pour chaque sous-parcelle, au moyen des un ou plusieurs groupes uniformes et du trajet optimal final déterminé pour chaque groupe uniforme.

8. Système (100) selon la revendication 7, dans lequel les un ou plusieurs processeurs matériels (104) sont configurés pour déterminer le trajet optimal intermédiaire couvrant la pluralité de sous-parcelles à partir de l'emplacement source, au moyen d'un algorithme d'acheminement optimal, sur la base de la distance euclidienne de chaque sous-parcelle à chaque autre sous-parcelle de la pluralité de sous-parcelles et de la distance euclidienne de chaque sous-parcelle à l'emplacement source, par :

détermination d'un premier arbre couvrant de poids minimal couvrant la pluralité de sous-parcelles et l'emplacement source, sur la base de la distance euclidienne de chaque sous-parcelle à chaque autre sous-parcelle de la pluralité de sous-parcelles et de la distance euclidienne de chaque sous-parcelle à l'emplacement source, chaque sommet d'une pluralité de sommets dans le premier arbre couvrant de poids minimal représentant soit l'emplacement source, soit la sous-parcelle de la pluralité de sous-parcelles, et chaque bord d'une pluralité de bords dans le premier arbre couvrant de poids minimal représentant une liaison entre soit (i) l'emplacement source et la sous-parcelle, soit (ii) deux sous-parcelles ;

calcul d'une pluralité de sommets impairs parmi la pluralité de sommets présents dans le premier arbre couvrant de poids minimal, sur la base d'un degré de chaque sommet ;

création d'un ou plusieurs sous-graphes de correspondance parfaite, à partir de la pluralité de sommets impairs, chaque sous-graphe de correspondance parfaite comprenant au moins deux sommets impairs parmi la pluralité de sommets impairs ;

combinaison des un ou plusieurs sous-graphes de correspondance parfaite avec le premier arbre couvrant de poids minimal, pour calculer un premier circuit eulérien ; et

suppression d'un ou plusieurs sommets en double dans le premier circuit eulérien pour créer un premier circuit hamiltonien, le premier circuit hamiltonien représentant le trajet optimal intermédiaire couvrant la pluralité de sous-parcelles à partir de l'emplacement source.

9. Système (100) selon la revendication 7, dans lequel les critères de groupe prédéfinis comprennent :

(i) un temps total requis pour compléter les un ou plusieurs groupes intermédiaires est inférieur au temps total pour réaliser les une ou plusieurs activités agricoles dans la pluralité de sous-parcelles ;

(ii) un nombre total d'heures en jour-personne de chaque travailleur agricole pour compléter un ou plusieurs groupes intermédiaires est inférieur au nombre maximal d'heures en jour-personne de chaque travailleur agricole ; et

(iii) la distance totale pour compléter chaque groupe intermédiaire par chaque travailleur agricole, à partir de l'emplacement source, est minimale.

10. Système (100) selon la revendication 9, dans lequel le temps total requis pour compléter les un ou plusieurs groupes intermédiaires est calculé au moyen du temps d'achèvement prédéfini pour terminer les une ou plusieurs activités agricoles pour une unité de surface par chaque travailleur agricole et du temps de traversée prédéfini pour traverser l'unité de surface par chaque travailleur agricole.

11. Système (100) selon la revendication 7, dans lequel le plan de couverture optimal comprend un programme journalier de chaque travailleur agricole affecté aux un ou plusieurs groupes uniformes pour effectuer le type d'activité agricole requis pour chaque sous-parcelle présente dans le groupe uniforme.

12. Système (100) selon la revendication 7, dans lequel les un ou plusieurs processeurs matériels (104) sont configurés pour déterminer le trajet optimal final pour chaque groupe uniforme, au moyen de l'algorithme d'acheminement optimal, par :

détermination d'un deuxième arbre couvrant de poids minimal couvrant les une ou plusieurs sous-parcelles présentes dans chaque groupe uniforme et l'emplacement source, sur la base de la distance euclidienne de chaque sous-parcelle à chaque autre sous-parcelle présente dans le groupe uniforme et de la distance euclidienne de chaque sous-parcelle à l'emplacement source, chaque sommet d'un ou plusieurs sommets dans le deuxième arbre couvrant de poids minimal représentant soit un emplacement source, soit une sous-parcelle présente dans le groupe uniforme, et chaque bord d'un ou plusieurs bords dans le deuxième arbre couvrant de poids minimal représentant une liaison entre soit (i) l'emplacement source et la sous-parcelle, soit (ii) deux sous-parcelles ;
calcul d'un ou plusieurs sommets impairs parmi les un ou plusieurs sommets présents dans le deuxième arbre couvrant de poids minimal, sur la base d'un degré de chaque sommet ;
création d'un ou plusieurs sous-graphes de correspondance parfaite, à partir des un ou plusieurs sommets impairs, chaque sous-graphe de correspondance parfaite comprenant au moins deux sommets impairs parmi les un ou plusieurs sommets impairs, si un nombre des un ou plusieurs sommets impairs est supérieur à deux ;
combinaison des un ou plusieurs sous-graphes de correspondance parfaite avec le deuxième arbre couvrant de poids minimal, pour calculer un premier circuit eulérien ; et
suppression d'un ou plusieurs sommets en double dans le deuxième circuit eulérien pour créer un deuxième circuit hamiltonien, le premier circuit hamiltonien représentant le trajet optimal final correspondant au groupe uniforme.

13. Un ou plusieurs supports de stockage d'informations non transitoires lisibles par machine comprenant une ou plusieurs instructions qui lorsqu'elles sont exécutées par un ou plusieurs processeurs matériels, provoquent :

la réception, via un ou plusieurs processeurs matériels, d'un ou plusieurs paramètres d'entrée pour générer le plan de couverture optimal, les un ou plusieurs paramètres d'entrée comprenant : une pluralité de sous-parcelles présentes dans une parcelle où les une ou plusieurs activités agricoles doivent être réalisées, des informations relatives à un ou plusieurs travailleurs agricoles dans la parcelle, les informations étant liées aux ressources humaines disponibles pour réaliser les une ou plusieurs activités agricoles dans chaque sous-parcelle de la pluralité de sous-parcelles, un ensemble de points de coordonnées de sous-parcelle pour chaque sous-parcelle de la pluralité de sous-parcelles, un ensemble de coordonnées d'un emplacement source, l'emplacement source représentant un point à partir duquel chaque travailleur agricole parmi les un ou plusieurs travailleurs agricoles commence à atteindre chaque sous-parcelle pour réaliser les une ou plusieurs activités agricoles, un nombre maximal d'heures en jour-personne de chaque travailleur agricole, un temps total pour réaliser les une ou plusieurs activités agricoles dans la pluralité de sous-parcelles, un temps d'achèvement prédéfini pour terminer les une ou plusieurs activités agricoles pour une unité de surface par chaque travailleur agricole, un temps de traversée prédéfini pour traverser l'unité de surface par chaque travailleur agricole, et un ou plusieurs types d'activités agricoles requis pour chaque sous-parcelle ;
le calcul, (i) d'une surface de sous-parcelle de chaque sous-parcelle de la pluralité de sous-parcelles, et (ii) d'un centroïde de chaque sous-parcelle de la pluralité de sous-parcelles, au moyen de l'ensemble de points de coordonnées de sous-parcelle associé à chaque sous-parcelle ;
le calcul, (i) d'une distance euclidienne de chaque sous-parcelle à chaque autre sous-parcelle de la pluralité de sous-parcelles, sur la base du centroïde associé à chaque sous-parcelle, et (ii) de la distance euclidienne de chaque sous-parcelle à l'emplacement source, sur la base du centroïde associé à chaque sous-parcelle et de l'ensemble de coordonnées de l'emplacement source ;

la détermination d'un trajet optimal intermédiaire couvrant la pluralité de sous-parcelles à partir de l'emplacement source, à l'aide d'un algorithme d'acheminement optimal, sur la base de la distance euclidienne de chaque sous-parcelle avec chaque autre sous-parcelle de la pluralité de sous-parcelles et de la distance euclidienne distance de chaque sous-parcelle avec l'emplacement source ;

la formation d'un ou plusieurs groupes intermédiaires parmi la pluralité de sous-parcelles, au moyen du trajet optimal intermédiaire, sur la base de la satisfaction d'un critère de groupe prédéfini, chaque groupe intermédiaire des un ou plusieurs groupes intermédiaires comprenant une ou plusieurs sous-parcelles parmi la pluralité de sous-parcelles ;

la détermination d'un ou plusieurs groupes uniformes par application d'un algorithme de distribution uniforme UDA aux un ou plusieurs groupes intermédiaires, dans lequel

chaque groupe uniforme comprend une ou plusieurs sous-parcelles parmi la pluralité de sous-parcelles, et la détermination des un ou plusieurs groupes uniformes, comprenant :

(a) le calcul d'une surface de parcelle totale de chaque groupe intermédiaire, par sommation de la surface de sous-parcelle de chaque sous-parcelle présente dans le groupe intermédiaire ;

(b) le calcul d'un écart type de surface de parcelle totale, au moyen de la surface de parcelle totale de chaque groupe intermédiaire parmi les un ou plusieurs groupes intermédiaires ;

(c) l'identification (i) du groupe intermédiaire ayant la plus grande surface de parcelle totale, et (ii) du groupe intermédiaire ayant la plus petite surface de parcelle totale, parmi les un ou plusieurs groupes intermédiaires, sur la base de la surface de parcelle totale de chaque groupe intermédiaire ;

(d) l'identification (i) de la sous-parcelle ayant la plus grande surface de sous-parcelle dans le groupe intermédiaire ayant la plus grande surface de parcelle totale, et (ii) de la sous-parcelle ayant la plus petite surface de sous-parcelle dans le groupe intermédiaire ayant la plus petite surface de parcelle totale ;

(e) la permutation de la sous-parcelle ayant la plus grande surface de sous-parcelle dans le groupe intermédiaire ayant la plus grande surface de parcelle totale, avec la sous-parcelle ayant la plus petite surface de sous-parcelle dans le groupe intermédiaire ayant la plus petite surface de parcelle totale, pour obtenir un ou plusieurs groupes intermédiaires successifs ;

(f) le calcul de la surface de parcelle totale de chaque groupe intermédiaire successif, par sommation de la surface de sous-parcelle de chaque sous-parcelle présente dans le groupe intermédiaire successif ;

(g) le calcul d' successif un écart type de surface de parcelle totale successive, au moyen de la surface de parcelle totale de chaque groupe intermédiaire successif parmi les un ou plusieurs groupes intermédiaires successifs ; et

(h) la répétition des étapes (c) à (g), en prenant les un ou plusieurs groupes intermédiaires successifs comme les un ou plusieurs groupes intermédiaires, jusqu'à ce que l'écart type de surface totale de parcelle successif soit le plus proche d'un seuil prédéfini, pour déterminer les un ou plusieurs groupes uniformes ;

la détermination d'un trajet optimal final pour chaque groupe uniforme, au moyen de l'algorithme d'acheminement optimal, sur la base de la distance euclidienne de chaque sous-parcelle à chaque autre sous-parcelle des une ou plusieurs sous-parcelles présentes dans le groupe uniforme et la distance euclidienne de chaque sous-parcelle présente dans le groupe uniforme à l'emplacement source, le trajet optimal final pour chaque groupe uniforme étant déterminé de façon à couvrir les une ou plusieurs sous-parcelles présentes dans le groupe uniforme à partir de l'emplacement source ; et

la génération du plan de couverture optimal pour la pluralité de sous-parcelles, sur la base d'un nombre des un ou plusieurs travailleurs agricoles, le type d'activité agricole requis pour chaque sous-parcelle, au moyen des un ou plusieurs groupes uniformes et du trajet optimal final déterminé pour chaque groupe uniforme.

System **100**

**108**

Memory **102**

Modules **102a**

Repository **102b**

I/O interface(s) **106**

Hardware
processor(s) **104**

FIG. 1

**200**

**202**
Data input unit

**204**
Data pre-processing unit

**206**
Optimal coverage planning unit

FIG. 2

300

Receive one or more input parameters for generating the optimal coverage plan, wherein the one or more input parameters comprising: a plurality of sub-plots present in a plot where the one or more agricultural activities to be performed, one or more farm workers, a set of sub-plot coordinate points for each sub-plot of the plurality of sub-plots, a set of coordinates of a source location, a maximum man-day hours of each farm worker, a total time to complete the one or more agricultural activities in the plurality of sub-plots, a predefined completion time for completing the one or more agricultural activities for a unit area by each farm worker, a predefined traversing time for traversing the unit area by each farm worker, and an agricultural activity type required for each sub-plot **302**

Calculate (i) a sub-plot area of each sub-plot of the plurality of sub-plots, and (ii) a centroid of each sub-plot of the plurality of sub-plots, using the set of sub-plot coordinate points associated with each sub-plot **304**

Calculate (i) an Euclidean distance of each sub-plot with each other sub-plot of the plurality of sub-plots, based on the centroid associated with each sub-plot, and (ii) the Euclidean distance of each sub-plot with the source location, based on the centroid associated with each sub-plot and the set of coordinates of the source location **306**

Determine an intermediate optimal path covering the plurality of sub-plots from the source location, using an optimal routing algorithm, based on the Euclidean distance of each sub-plot with each other sub-plot of the plurality of sub-plots and the Euclidean distance of each sub-plot with the source location **308**

( A )

FIG. 3A

( A )

Form one or more intermediate clusters from the plurality of sub-plots, using the an intermediate optimal path, based on satisfying a predefined cluster criteria, wherein each intermediate cluster of the one or more intermediate clusters comprises one or more sub-plots out of the plurality of sub-plots **310**

Determine one or more uniform clusters by applying a uniform distribution algorithm (UDA) on the one or more intermediate clusters, based on the Euclidean distance of each sub-plot with each other sub-plot of the one or more sub-plots present in the uniform cluster and the Euclidean distance of each sub-plot present in the uniform cluster with the source location, wherein each uniform cluster comprises one or more sub-plots out of the plurality of sub-plots **312**

Determine a final optimal path for each uniform cluster, using the optimal routing algorithm, wherein the final optimal path for each uniform cluster is determined to cover the one or more sub-plots present in the uniform cluster from the source location **314**

generate the optimal coverage plan for the plurality of sub-plots, based on a number of the one or more farm workers, the agricultural activity type required for each sub-plot, using the one or more uniform clusters and the final optimal path determined for each uniform cluster **316**

FIG. 3B

FIG. 4

FIG. 5

FIG. 6

FIG. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202121046952

- CN 113379268 A

**Non-patent literature cited in the description**

- **SINAI LIOR et al.** *Efficient path planning for multiple agents in agriculture fields,* 01 February 2020

- *Christofides algorithm - Wikipedia,* 21 March 2021, 1-5